# EUROPEAN PATENT APPLICATION

(11) **EP 4 478 196 A1**
(43) Date of publication of application: **18.12.2024**
(21) Application number: 24182351.7
(22) Date of filing: 14.06.2024
(51) Int. Cl.: G06F 11/14, H04L 67/10

(54) **RESILIENT TRANSACTION PROCESSING PIPELINE ACROSS MULTIPLE DATA CENTERS**

(30) Priority: 15.06.2023 US 202363521228 P; 18.12.2023 US 202318543351
(71) Applicant: Chicago Mercantile Exchange Inc., Chicago IL Illinois 60606 (US)
(72) Inventor: SINGH, Inderdeep, Chicago, 60606 (US); MADHAVAN, Ajay S., Chicago, 60606 (US); MARTINEZ, Maximiano J., Chicago, 60606 (US)
(74) Representative: Boult Wade Tennant LLP

(57) **Abstract**

The disclosed embodiments relate to a system/process which can be used to provide redundancy and error/failure recovery to a System of Record (SOR), such as an electronic financial transaction processing system or sub-system thereof, which processes transactions received from one or more sources and generates results/outputs based thereon for communication to one or more recipients/destinations/consumers. The disclosed embodiments minimize, if not eliminate, both the amount of data, i.e., the number of transactions, which can be lost during a failure and the performance impact on the SOR. Generally, the disclosed embodiments are implemented so as to receive/intercept each incoming transaction communicated to the primary instance prior to receipt thereby and intercept or otherwise regulate the communication of the outputs of the primary instance, generated based on the primary instance's processing of the incoming transactions, to the destinations/recipients/consumers thereof.

## Description

### RELATED APPLICATIONS

This application claims the benefit of the filing date under 35 U.S.C. § 119(e) of U.S. Provisional Application Serial No. 63/521,228, filed June 15, 2023, the entirety of which is incorporated by reference herein and relied upon.

### BACKGROUND

Computer-implemented applications/systems, such as financial transaction processing systems and other systems of record (SOR), also known as a Source System of Record (SSoR), generally process electronic transactions received thereby to produce outputs/results which are subsequently stored in a database or other data storage and/or further communicated to consumers/customers, such as end users or other applications, e.g., for further processing. The processing of each transaction by the system generally results in a particular change of state in that system which is reflected in the data stored in the associated database, where the current state of the system, as reflected in the database, at any given moment is the result of all of the previously processed transactions which were completed, i.e., "committed," since the system was started/initialized, e.g., from some known initial state, up to that moment in time. In deterministic applications/systems, the current state is further dependent upon the order in which those prior transactions were processed by the system, wherein processing a same set of transactions in a different order may result in a different system state, etc.

In some applications, such as electronic financial trading, electronic commerce and other applications where deterministic behavior, e.g. the order in which operations and/or messages are processed, is important, electronic messaging services may be required to ensure that a set of electronic messages related by their ordering that are queued for electronic communication/delivery to subscribers/consumers are all delivered to any single subscriber/consumer or otherwise consumed, by one or more subscribers/consumers, in a particular order, e.g. the order in which they were placed into the queues by the publisher/producer and/or the same order as delivered to/consumed by another consumer.

For example, a business transaction may be defined as one or more operations or acts which are undertaken according to one or more associated business rules (including industry, legal or regulatory requirements or customs) to accomplish a business or commercial purpose, which may include compliance with industry, regulatory or legal requirements. A business transaction may be implemented by one or more computer processing and/or database operations/program steps, which themselves may be referred to as transactions. Business transactions, as defined by the associated business rules, may be characterized as deterministic in that they can be characterized by an interdependency or relationship which affects their result, such as a dependency on the order in which they are processed, such as a temporal order, and/or a dependency on real time processing, as defined by business rules, so as to effect the business/commercial purpose and/or meet participant expectations, referred to herein as "transactional determinism." Generally, a set of deterministic transactions will provide a particular result when executed in one order and a different result when executed in a different order. Accordingly, messages related to such transactions may need to be communicated and consumed in a particular order to ensure an expected and/or consistent result of the subsequent processing thereof.

Many business applications rely upon centralized databases/database management systems (DBMS's), i.e., a database under the control of single or central entity, which are typically implemented as a SOR. Financial instrument trading systems are one example of complex systems that utilize databases according to an SOR model. A SOR is data management term for an information storage system, e.g., a computer implemented database/DBMS that is designated as the authoritative data source for a given data element or piece of information. Accordingly, while other entities may maintain copies of the data stored by a SOR, in the event of dispute between the value of particular data as stored in the SOR and as stored in a copy, the value stored by the SOR will be considered the true value. The need to identify systems of record can become acute in organizations where management information systems have been built by taking output data from multiple source systems, re-processing this data, and then re-presenting the result for a new business use. In these cases, multiple information systems may disagree about the same piece of information. These disagreements may stem from semantic differences, differences in opinion, use of different sources, differences in the timing of the extraction, transformation, and loading operations that create the data they report against or may simply be the result of bugs. The integrity and validity of any data set is open to question when there is no traceable connection to a good source, such as a known SOR. Where the integrity of the data is vital, if there is an agreed SOR, the data element must either be linked to, or extracted directly from it. Generally, a "system of record" approach may be used where there is a single authority over all data consumers, and those consumers have similar needs.

Generally, an SOR model is used for recording business related data such as transactions and agreements. In a SOR model, a trusted party holds and exclusively controls records of transactions in a centralized database. Individuals or other entities place their trust in the institution that hosts/controls the SOR, or otherwise agree that the SOR is the authoritative data source. Government and government agencies, financial institutions and even private/public companies may host/control the data and the SOR. For example, banks, 401k providers, utility companies, and many of the service agencies that people or business entities transact with are the SOR for that individual's or business entity's transaction records, e.g., account balance and/or transaction history with that service or agency. As noted above, in the event of a dispute as to whether data in the SOR is correct as compared to another copy of that data which may differ, the institution that holds the SOR is typically deemed to have the correct data unless there is evidence to the contrary. Alternatively, when both parties are large institutions and neither institution is the SOR (e.g. two major financial institutions, such as two banks), messages are exchanged for every transaction and at the end of a period of time, e.g. at the end of the business day, a reconciliation process is undertaken by which each party validates their mutual understanding of each transaction which "seals" the transactions and, e.g. any end of day account balance resulting therefrom. In the event of a dispute, such as due to a bug, lost message or tampering, the parties must undertake a resolution process to determine the correct results, e.g., by reviewing network communication logs and/or transactional timestamps to determine the order of events. The SOR model, and the reconciliation process, referred to as a "trust and reconciliation" process, are commonly used in the implementation of electronic financial instrument trading systems.

In general, with respect to SOR systems, and their underlying databases, a commit operation is the updating of a record in a database and in the context of a database transaction, a commit refers to the saving of data permanently, such as after a set of tentative changes. The processing of transactions, such as by a SOR, typically involves multiple intermediate processing steps/stages to process and/or transform input data which end in a commit operation of the final processing result/output. A commit ends a transaction, e.g., within a relational database, and allows all other users to see the changes and ensures data integrity and certainty, e.g., as between competing transactions. A commit operation is a function of the fault tolerance and failure/disaster recovery mechanisms of a database which ensure that the data must still be saved even in case of loss of some key components, i.e., disk failure, and allow for recovery, such as in the case of sudden power loss. Database changes, such as the intermediate results of in-process/incomplete processing of transactions, which are uncommitted at the time of such failure are considered incomplete and, if not otherwise unrecoverable, must be undone or rolled back, or otherwise repeated once the failed system has been recovered.

Critical applications/systems often feature failure/disaster recovery mechanisms which allows the state of a primary instance of the application/system, e.g., the state of the database thereof, to be recovered, restored, replicated and/or restarted, etc. in the event of an otherwise uncorrectable or unrecoverable temporary or permanent failure of one or more components of the primary instance of the application/system or the entirety thereof, or one or more components of the infrastructure upon which the primary instance is implemented. The state of the system often refers to the state as of the most recent committed transaction prior to the failure.

These failure recovery mechanisms may take the form of a backup system. One type of backup system may simply be a storage system/device which stores a copy of all inputs to the primary instance in a database for later replication or, more practically, periodically makes a copy of the current state of the system, referred to as a "checkpoint," along with maintaining a record of each input to the primary system since the most recent checkpoint. Once the primary system is repaired or replaced, the most recent checkpoint can be used to restore the state of the primary system as of the time of the checkpoint and, subsequent thereto, the record of inputs received subsequent to that checkpoint can then be "replayed", or otherwise re-processed, to restore the specific state of the primary system as of, or just before or after, the moment of failure.

Another type of backup system may provide a fully redundant copy/instance of the primary system, including the primary system's database, which receives copies of all inputs to the primary instance and processes those inputs upon receipt and stores the results just as the primary system would but, for example, reserving its outputs rather than sending them on to the consumers of those outputs, etc., e.g., to avoid delivering duplicates of the outputs of the primary instance during normal operations While potentially more expensive, with this type of backup system, when the primary system fails, the backup system can simply be switched over to be used in its place, with some caveats which will be explained below. This may provide for a faster and/or more reliable recovery after a failure occurs.

When implementing a backup system, the operator needs to consider where to locate, physically and/or logically, that backup system relative to both the primary instance and the source of inputs thereto. For example, in the case of physical infrastructure issues or natural disasters which may affect the geographic location of the primary instance, one would not want the backup system to be physically located in the same geographic areas as then it may be vulnerable to the same issues, thereby reducing the effectiveness of the backup system. Accordingly, most operators locate their backup systems in different geographic regions from where the primary instance is located to minimize the chance that both systems will experience failures due to the same cause. It will be appreciated that many operators deploy multiple backup systems located in disparate geographic regions to further minimize the likelihood of the same event compromising both the primary instance and the availability of at least one backup system.

However, locating the backup system in a geographic location different from where the primary instance is located creates a latency issue with regard to communication of the transactional inputs to both systems. One solution may be to receive the transactional inputs from their source at a location that is equidistant, or otherwise subject to substantially equal/symmetric communications latencies, to both the primary instance and the backup system, where the transactions are then relayed to both system from this equidistant location. However, for storage-based backup systems, checkpoints from the primary instance may still need to be periodically communicated from the primary instance to the backup system. Furthermore, in latency sensitive applications, such as financial transaction processing, it may be necessary to locate the primary instance close to the source of transactions sent thereto so as to minimize the operational latency of the application/system when operating normally. This may necessarily mean the backup system has to be located further from that source of transactions.

As used herein, primary instances and backup instances/systems, or components thereof, may be geographically/physically and/or logically separated from one another introducing communications latency therebetween, i.e., they may be separated geographically/physically, e.g., located in different physical locations or geographic regions, and/or logically separated, e.g., by one or more interconnecting communications media or other intervening components, such as relays, gateways or switching devices. For example, a communications path of a certain length comprising numerous intervening gateways or switching devices may be characterized by more latency than a longer communications path having fewer such intervening components. More particularly, the distance/length/latency of a given data/communications path interconnecting any two of the described components or other intervening components, whether those components are themselves physically close or not, may introduce latency in the electronic communications therebetween. Further, any asymmetries in the distance/length/latency between the interconnecting data/communications paths, or the number or type of intervening components, whether or not they interconnect the same source and destination end points, may introduce similar asymmetries in the latencies of the electronic communications communicated therethrough.

Further, differences in communications latency of a given communications/network path, or as between two different network paths to a common destination, may be caused by static differences, dynamic differences, or a combination thereof, in the network infrastructure which makes up those network paths, e.g., network switches, wires, wireless connections, etc. Static differences include: media type/characteristics such as cat6 copper cable, fiber optic, satellite, microwave or Wi-Fi; cable length/impedance where a longer and/or higher impedance cable requires a longer time to transit than a shorter and/or lower impedance cable of the same type; number, type and capability of routing and switching devices along the path which impart processing delay to perform their functions; transceivers which transfer/translate messages between different media such as between copper, fiber and wireless media, etc. Generally, static differences are differences which do not change over time, e.g., delays attributable to static characteristics of the network infrastructure. Dynamic differences include: network load where increased network traffic/congestion may increase latency; interference such as optical or radio frequency interference, sunspots, etc. which may cause errors and retries in the transmission; equipment/media degradation or mechanical issues such as temperature/environmental sensitivity, poor connections or degraded components which may impart transmission errors or intermittent or varying changes in impedance, capacitive and/or resistive delay, etc. Generally, dynamic latency differences vary over time and may or may not be predictable. Given dynamic latency variations, a network path that has a higher latency as compared to another network path at a particular time may have a lower latency at another time. Dynamic latencies may affect different messages along the same path where, not only may one message transit the network path faster than another message, but one message may overtake another message in transit such as where an earlier forwarded message must be resent by intermediate network component due to an intermittent error and where the earlier message is resent after a later forwarded message is communicated by that intermediate network component. It will be appreciated that static latency differences may be addressed by measuring the latency variances among the different network paths and physically or logically statically compensating for those difference such as by adding an additional length of cable or an electronic fixed delay buffer along a lower latency path to equalize that path to a longer latency path. Alternatively, slower network infrastructure components may be replaced with faster components to decrease latency commensurate with another network path. While some dynamic latency issues may be mitigated using static changes, such as replacing interference-susceptible components with shielded components, implementing proper maintenance and upkeep, etc., it will be appreciated that given the nature of dynamic latencies, such latencies cannot be completely addressed in this manner.

Communications latency differentials/disparities/asymmetries may result in transaction inputs being received at the backup system later than they were received at the primary instance resulting in the backup system operating "behind" the primary instance. That is, at any moment in time where the primary instance is processing a series of transactions, T, T+1, T+2 ... T+50, etc., where the primary has processed up to T+38, the backup may still be processing transaction T+2. Furthermore, at any given moment, transaction inputs, e.g., T3-37, may be en route, or otherwise "in flight" or "on the wire" to the backup system and vulnerable to data loss should a failure compromise the mode of communication.

Accordingly, backup systems often confirm the receipt of the transaction inputs back to the primary instance, or disaster recovery component associated therewith, i.e., by transmitting a confirmation that the transactions have been committed by the backup system, so that in the event of a failure, the state of the backup system, i.e., the last transaction committed by the backup system, with respect to the primary instance, i.e., the last transaction committed by the primary instance, can be known and accounted for in the recovery process, i.e., it can be determined which transaction were not completed either by the primary instance and/or the backup system, and where, within the stream of received transactions, re-processing needs to commence. Still, some data loss may occur where, for example, a failure compromises both the receipt of transaction inputs at the backup system and/or the mechanism for accounting for receipt/committing thereof by the primary instance and/or the backup system.

In some implementations, the potential or tolerance for such losses is, or can be, a known quantity and may be defined and accounted for, e.g., an acceptable maximum data loss, also referred to as a Recovery Point Objective (RPO). RPO may be generally defined as the maximum amount of data - as measured by time or the number of transactions - that can be lost after a recovery from a disaster, failure, or comparable event before data loss will exceed what is acceptable to an organization. An RPO determines, for example, the maximum age of the data or files in backup storage needed to be able to meet the objective specified by the RPO, should a network or computer system failure occur. An organization's loss tolerance, or how much data it can lose without sustaining significant harm, is related to RPO, and may be set forth in the organization's business continuity plan (BCP). This also dictates procedures for disaster recovery planning, including the acceptable backup interval, because it refers to the last point when the organization's data was preserved in a usable format. For example, an RPO of 60 minutes requires a system backup every 60 minutes. Often, high-priority applications demand tighter RPOs, which will require more frequent backups. For example, an RPO of 0 to 1 hour may be specified for critical operations that cannot afford to lose over an hour of data, i.e., they are dynamic, high volume, and difficult or impossible to recreate due to the number of variables involved. Patient records, banking transactions, and CRM systems all fall within this tier.

In some applications, such as financial applications, regulatory requirements may specify the degree to which data loss is acceptable. For example, a regulatory agency, such as the CFTC, may specify an RPO of 30 seconds for financial transaction processing systems.

In proprietary implementations of an application/system where the operator has full control over the hardware which hosts the application/system, software, geographic locations, etc. of their implementation, the above latency issues may be mitigated/accounted for in devising an acceptable disaster recovery plan designed to minimize recovery/down time and mitigate, if not eliminate, potential data loss, i.e., an RPO of zero. For example, in systems utilizing Oracle databases, Oracle provides tools and hardware appliances, such as Exadata and Data Guard, products of Oracle Corporation located in Austin, TX, which provide high performance block-level backup and synchronization services. Using such services, zero transaction loss may be achieved during a failure and recovery therefrom.

However, shared, or multi-tenant implementations, sometimes referred to as "cloud" based deployments or implementations, are now becoming more prevalent, where computing resources are operated by a third-party vendor, remotely located, and offered as a service, such as via virtual computing systems, which "host" the operator's application/system. Such services are advantageous as they can mitigate the cost of operating a proprietary data center: such as real estate, utility and staffing costs; they can provide additional computing resources dynamically/on demand, such as at peak load times; they offer additional computing resources to ensure reliability, availability and serviceability; and they often operate multiple geographically disparate data centers offering reduced latency to customers located in different geographic regions and/or increased redundancy/resiliency, etc.

However, such advantages do not come without costs, e.g., a significant reduction in the ability of a customer/operator to control the hardware, software and geographic locations of their application/system being hosted, as well as the backup systems therefore. For example, the operator may not know or have control over where, geographically, the primary instance of their application/system, or the backup system therefore, is being hosted and therefore may not be able to adequately account for communication latency therebetween. Furthermore, as the actual computing resources provided by the service are often shared with other customers, the overall processing loads on those resources may vary dynamically, both between different computing resources and over time, resulting in unpredictable processing latencies for the primary instance and/or backup system. For example, the processing of a given transaction by a hosted primary instance may take a certain amount of time, which is its processing latency, whereas the processing of that same transaction by a hosted backup instance may take a different amount of time due to the asymmetry of the overall processing load of the computing resources on which those instances are executing at the time the transaction is processed thereby. Furthermore, as the processing loads may dynamically vary, so too will the processing latencies. This may make accounting for overall latency differentials, including both communications and processing latency differentials, difficult when attempting to recover from a failure and synchronize the backup system to a recovery state since time can longer be relied upon as a means of system processing alignment.

Third party vendors may offer service level agreements, including native backup system/disaster recovery solutions, but, owing to the nature of a cloud service as having to be able to cost-effectively service many customers with substantially varying needs, such solutions are often necessarily generic in their implementation and require compromises on the part of customers in terms of wider acceptable latency variations, increases in the amount of acceptable data loss in failure situations, increased down time, etc. For example, a cloud vendor may offer no better than a 15-minute RPO.

In critical applications, such compromises may not be acceptable to the operator's customers, regulatory/governmental agencies, etc.

Accordingly, it is desirable to provide a disaster recovery system which can be implemented in concert with a cloud-based deployment of an application/system which restores the advantages of proprietary deployment by mitigating both the potential for data loss and any performance impact on the primary system.

### BRIEF DESCRIPTION OF THE DRAWINGS

FIG. 1 depicts a computer network system, according to some embodiments.
FIG. 2 depicts a general computer system, according to some embodiments.
FIG. 3 depicts a block diagram of a system for providing resiliency to a primary instance according to some embodiments.
FIG. 4 depicts a timing diagram of the operation of the system of Figure 3, according to some embodiments.
FIG. 5 depicts a further timing diagram of the operation of the system of Figure 3, according to some embodiments.
FIG. 6 depicts a timing diagram comparing latencies of the system of Figure 3, according to some embodiments.
FIG. 7 depicts a block diagram of a system for providing resiliency to a primary instance according to some embodiments.
FIG. 8 depicts a flow chart showing the operation of the system of Figures 3 and 7 according to some embodiments.
Fig. 9A depicts a block diagram of a system for providing resiliency to a primary instance according to an alternate embodiment.
FIG. 9B depicts a timing diagram of the operation of the system of Figure 9A, according to some embodiments.
Fig. 10 depicts a block diagram of a system for providing resiliency to a primary instance according to an alternate embodiment.
FIG. 11 depicts a flow chart showing the operation of the system of Figures 9A and 10 according to some embodiments.
FIGS. 12A-12B depict timing diagrams of the operation of the system of Figure 9A, according to some embodiments.

### DETAILED DESCRIPTION

The disclosed embodiments relate to a system/process which can be used to provide redundancy and error/failure recovery to a System of Record (SOR), such as an electronic financial transaction processing system or sub-system thereof, which processes transactions received from one or more sources and generates results/outputs based thereon for communication to one or more recipients/destinations/consumers.

The result of processing by the SOR may include committing those transactions, or the processing results therefrom, to a database. In one embodiment, the SOR is the Front End Clearing (FEC) system implemented by Chicago Mercantile Exchange Inc. FEC is a message processor-oriented system which uses a messaging platform for both inter-process and external client/server communications. As described in more detail below, FEC is a trade and allocation management system that clearing firms electronically interact with to send and receive electronic messages to/from the CME trading platform regarding the clearing of trades. In one embodiment, the FEC System is a web-based application that provides clearing member firm's back-office staff with an integrated method for entering and processing a variety of trade types, such as block trades, differential spreads, Exchange of Futures for Related Positions (EFRP), Fungibles, Pit Trades, Transfer Trades, etc.

Generally, the disclosed embodiments need only be implemented at a point within a system where the ability to recover from a failure is to be provided. In one implementation, the disclosed embodiments are implemented as part of a messaging platform used to carry and/or manage messages between the FEC and the clearing firms via the Clearing Message Broker ("CMB") as described in U.S. Patent No. 8,149,732, incorporated by reference herein. Messaging is a form of loosely coupled, asynchronous, distributed communication between electronic devices, or applications/systems executing thereon, where, in this context, the term "communication" can be understood as an exchange, via an electronic communications medium, of electronic messages or transactions, i.e. a discrete units of electronic communication intended by the source, also referred to as a producer or publisher, for consumption by some recipient or group of recipients, referred to as a consumer or subscriber, wherein the source and recipient may be software components coupled with each other, such as via an electronic communications channel such as a bus or electronic communications network. A system for implementing messaging may be referred to as a system, platform, transport, architecture, middleware, or combination thereof. The logical and/or physical mode of communication implemented by a messaging system, platform, or middleware may be referred to as transport.

As will be described with respect to the alternative embodiment described below, one option to mitigate potential data loss in a cloud based deployment of an SOR may be to prevent the primary instance from even beginning to process a given transaction until it is known that the backup system has at least received a copy of the transaction, e.g., the primary instance, or a disaster recovery component thereof, has received an acknowledgement of receipt, such as a commit message, from the backup component. Once it is known that the backup system has at least received, i.e., committed, a copy of the transaction, the primary instance can proceed to process that transaction with the assurance that should the primary instance then fail before it can commit that transaction, the transaction will not be lost. This type of implementation may be advantageous as it ensures, regardless of the communications and/or processing latency between the primary instance and the backup system, that there will be no data loss. However, such an implementation may have a severe impact on the performance of the primary system as its performance is now dependent on the potential of a substantial communications latency of sending a copy of the transaction to the backup system, the likely-varying processing latency of the backup system performing its processing to at least confirm receipt or commit, and the potential of a substantial communications latency of the transmission of that confirmation back to the primary instance. Where system performance may be critical, such degradation of performance may not be acceptable.

The disclosed embodiments minimize, if not eliminate, both the amount of data, i.e., the number of transactions, which can be lost during a failure, the number of process outputs/results which may need to be resent upon recovery, and the performance impact on the SOR. The disclosed embodiments may be used with, or otherwise layered on top of, a cloud-based deployment of both the SOR, referred to as the "primary instance," and a backup system therefore, referred to as the "backup instance," without being dependent thereon so as to both gain the operational advantages, and avoid operational limitations and intricacies, of such a deployment. The backup instance may take the form of one or more storage systems/devices which maintains a record of the state of the primary instance and/or one or more redundant copies of the primary instance which processes the same input messages to produce the same results therefrom. Generally, the disclosed embodiments are implemented so as to receive/intercept each incoming transaction communicated to the primary instance prior to or substantially simultaneously with receipt thereby so as to forward a copy thereof to the backup instance in parallel with the processing of the transaction by the primary instance and intercept or otherwise regulate the communication/publication of the outputs of the primary instance, generated based on the primary instance's processing of the incoming transactions, to the destinations/recipients/consumers thereof based on receipt of an acknowledgment from the backup instance that the corresponding transaction has been successfully received/committed thereby. This may be referred to as "parallel multi-region commit." By regulating the communication/publication of the outputs of the primary instance as described, the primary instance may continue to process incoming transactions independent of any latency incurred via the interaction with the backup instance. Further, the conditions under which duplicate outputs may be resent, i.e., where a failure has occurred, such as a failure which occurs between the receipt of a commit/acknowledgment and release/transmission of the corresponding outputs, which undermines the ability of the system to know which outputs were transmitted prior to the failure, is minimized. Minimizing duplicative outputs reduces the impact on the recipients of those outputs having to identify and reconcile duplicates. In one implementation, the output log function of the alternate embodiment described below may be implemented to track which outputs are actually transmitted and periodically communicate this information to the backup instance to further minimize the number of outputs which may need to be resent during recovery.

Where the potential of a substantial communications latency of sending a copy of the transaction to the backup system, the potential of widely varying processing latency of the backup system performing its processing to at least confirm receipt or commit, and the potential of a substantial communications latency of the transmission of that confirmation back to the primary instance are not significant, the performance impact of waiting on the response from the backup instance may be tolerable. Therefore, preventing the primary instance from even beginning to process a given transaction until it is known that the backup system has at least received a copy of the transaction may be preferrable as it may present a simpler implementation.

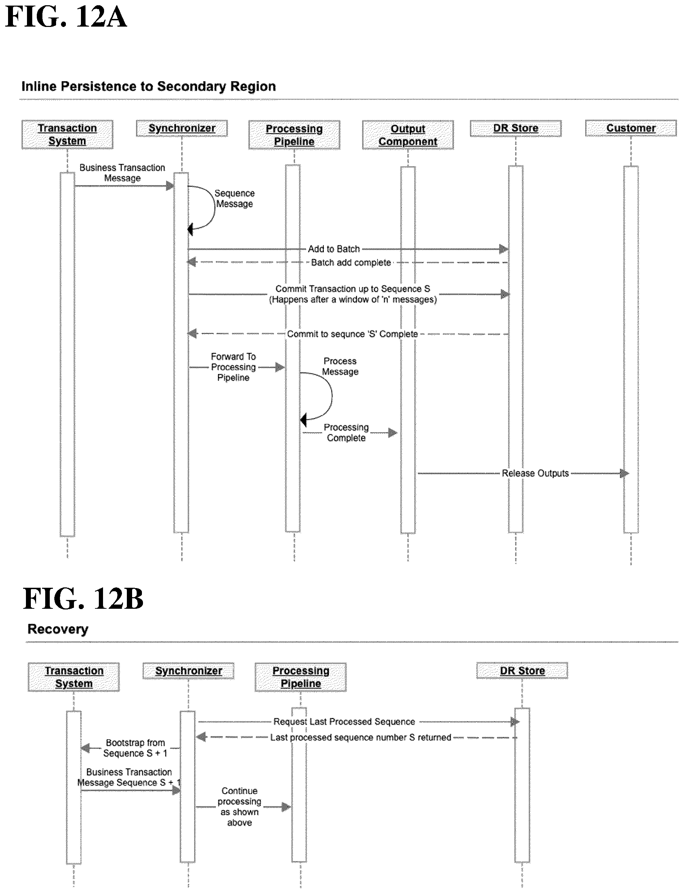

In an alternate embodiment, as depicted in Figure 12A, which may be referred to as "inline multi-region commit," incoming messages may be intercepted and accumulated in a memory, buffer, or other storage prior to being communicated to the primary instance. Messages may be accumulated until either threshold quantity of messages are received or, so as to avoid unnecessarily delaying processing during periods of low/slot messaging activity, a threshold amount of time has elapsed. Once either the threshold quantity is reached or time has elapsed, the accumulated messages are forwarded in batch to the backup instance for storage/processing, etc. A new accumulation of incoming messages may also then be initiated to similarly accumulate subsequently received messages. Upon receipt of an acknowledgement/commit message from the backup instance indicative of the backup instance having successfully processed/stored the batch of accumulated messages, the batch of accumulated messages are then forwarded to the primary instance for processing thereby and the resultant generation of corresponding output results/messages. As the output result messages are generated and transmitted by the primary instance, a log of those result messages is maintained and periodically communicated to the backup instance so as to confirm which input messages have been successfully completed and indicate, in the case of a failure, where message re-processing may need to commence during recovery (depicted in Figure 12B).

This alternative embodiment presents a simpler implementation than the parallel multi-region commit embodiment but may not perform as fast and may result in "stop and go" processing by the primary instance as it awaits the receipt of the acknowledgement/commit from the backup instance before it may commence processing a batch of messages. In addition, message consumers which receive the output result messages may be required to be configured to keep track of those result messages as, when recovering from a failure situation, the re-processing of input messages may result in duplicative output result messages being transmitted, depending upon the frequency with which the successful completion of input messages is communicated to the backup instance.

While a typical single message may incur up to 20-25 ms of latency awaiting a commit acknowledgement from the backup instance, this alternative embodiment recognizes that the backup instance, when processing/committing messages in batch, under most operating conditions may be able to receive, commit, and return the acknowledgement thereof to the primary instance within a much lower per-message latency, i.e., before the primary instance completes processing of a prior batch of accumulated messages and, therefore, has to wait. For example, where batches of 500 messages may be accumulated and communicated to the backup instance, message rates of about 2500 transactions per second may be tolerated without the primary instance having to wait. Where the normal operating conditions include a rate of 900 messages per second, the alterative embodiment will not present a bottleneck to the primary instance. Buffering may be provided throughout the messaging/middleware platform/pipeline to accommodate infrequent increases/bursts of messaging activity, e.g., peaks of 12000 messages per second or more.

It will be appreciated that the threshold batch size of incoming messages may be tuned to the expected average number of messages per second to be received, the average latency, i.e., time from when the message batch is communicated to the backup instance to when the acknowledgement thereof is received, and to the rate at which the batch of messages, once acknowledged, may be processed by the primary instance so as to be ready to process the next batch of messages, ideally no later than contemporaneous with the receipt of the acknowledgement thereof from the backup instance. For situations where the rate of incoming messages may be slower than usual, the batch timer may be set so as to trigger a batch of messages before the requisite number of messages has been received/accumulated. This time may be configured to maintain a minimum overall message processing performance, e.g., a maximum processing latency. In one embodiment, the primary instance may be capable of processing 2500 messages per second.

Similarly, as was noted, while awaiting acknowledgment of a particular batch of messages, a new batch may be initiated as new incoming messages continue to be received. The number of parallel message batches which may need to be handled by the system may be determined based on the expected peak message load as well as the upstream capacity of the messaging platform to buffer messages that are en route to the primary instance. These may all be implementation dependent.

In this alternative embodiment, the backup instance further needs to know where to restart message processing in the event of a failure, i.e., what was the last message successfully processed by the primary instance, i.e., the result thereof communicated to the recipient/consumers. In this embodiment, however, contrary to the embodiment described above, as the primary instance successfully completes the processing of a message, the output result thereof is immediately transmitted to the consumer/recipient. Accordingly, in this alternative embodiment, the occurrence of this output event must be communicated to the backup instance in order for the backup instance to know that the corresponding message was successfully processed. However, communication of the event occurrence to the backup instance, on a message-by-message basis, can incur similar individual message latency as noted above for incoming messages. Accordingly, in one implementation, an indicator of which messages the primary instance has successfully completed is maintained, e.g., the sequence number of last successfully processed messages is tracked, and the then current value of this indicator is periodically transmitted to the backup instance. In one implementation, this data is included, or "piggybacked," with a message batch. In one embodiment, the indicator may be transmitted ever 5 ms, every 500 messages, or a combination thereof, i.e., to dynamically account for variations in the rate of incoming messages and avoid unnecessarily delaying transmission of the indicator and increasing the number of messages to be reprocessed during a failure recovery.

The longer the system waits to communicate the indicator of the most recently successfully processed message to the backup instance, the more messages, should a failure occur, that may need to be reprocessed by the backup instance for which outputs were already successfully generated and transmitted but not reported to the backup instance. That is, if the system waits for 10 successfully processed messages before communicating the indicator, and a failure occurs after message 9 was successfully processed, the backup instance will be unaware that those 9 messages were successfully processed, necessitating the re-processing thereof. This will result in duplicative output messages being sent for which the consumers/recipients thereof must be tolerant. The balancing of the waiting time to minimize the performance impact of transmitting the indicator vs the number of potential duplicative messages that may result may be implementation dependent.

In an alternative implementation, rather than stall the inputs to the primary instance until it is known that they have been safely committed to the backup instance, the synchronizer, or functionality thereof, may be located at a point or points where the primary instance saves or updates its operating state based on its processing of a given input, e.g., where the primary instance stores/commits its intermediate processing results, such as to a database. In this implementation, as the primary instance processes a given input, it accumulates, such as in a memory buffer, the resultant processing outputs/state changes, e.g., storage operations (sql statements) which may include the generation of output messages to be communicated/published to other consumers, prior to committing the outputs/state changes. It will be appreciated that, in one implementation, the storage operations may actually proceed to the database but the commit of those operations will be reserved as described. After a configurable period of time, or after a threshold number of outputs/state changes have been accumulated, the synchronizer communicates the accumulated/batched outputs/state changes to the backup instance to be applied thereby so as to synchronize the state of the backup instance. Upon receipt of an acknowledgment/confirmation from the backup instance that the data has been received and applied successfully, the primary instance then proceeds to commit the outputs/state changes, i.e., to its own database. While awaiting the acknowledgment/confirmation from the backup instance, the primary instance may commence processing of its next input. In one implementation, output messages to be communicated/published to a subsequent consumer may be held until the acknowledgment/confirmation from the backup instance is received. In an alternative implementation, the output messages are not held and are instead immediately communicated/published but, as was described above, a log is maintained of which output messages have been successfully communicated and this log is periodically communicated to the backup instance to minimize the communication/publication of duplicative outputs during recovery from a failure as was described above.

As with the other implementation of the inline multi-region commit, if the rate of receipt of inputs is lower, or the processing latency of the primary instance, is greater, than the round trip latency to communicate the accumulated state data to the backup instance and receive the corresponding acknowledgement therefrom, the performance impact on the primary instance will be minimal.

For example, in cases where the wall to wall (from the time that the sender sends the message to the time that they receive the acknowledgment or the results of the processing) time is allowed to be much larger and the backup instance's latency is not significant- then one could theoretically (in batches) commit inline, such a via one or more remote store data operations) to the remote backup instance after sending the output message.

As an example - assume a primary instance which processes input message and sends out output messages comprising confirmations. Let Tr be the time to read, Tp be the time to process, Tw time to write out a message and last Tc the time to commit the entire transaction. In general the total time for a transaction would then be Tr + Tp + Tw + Tc and the number of transactions per seconds per thread would be 1 / [Tr + Tp + Tw + Tc]

If the transactions do require strict ordered processing but the wall to wall time can be compromised by processing transactions in a batch and committing once. Then the total time for a the batch of transactions with size N would be N * [Tr + Tp Tw] + Tc and the max possible transaction processing delay would be the same. But the throughput would be N * 1 / N * [Tr + Tp Tw] + Tc].

However, assuming an efficient implementation:
Tr = 1ms
Tp = 100ms
Tw = 1ms
Tc = 200ms

Without batching, nearly 3 TPS may be obtained with each message being acknowledged or processed in 0.3 seconds. With a batch size of 100, nearly 9.8 TPS may be obtained but for some message acknowledgements or results - the customer would have to wait 10.2 seconds (mean being 5 seconds).

To ensure that we include a backup instance in the scenario and the remote backup instance's batch insert with immediate commit time is Tb (b for business continuity) then the equation for total time becomes N * [Tr + Tp Tw] + Tc + Tb and TPS = N * 1 / N * [Tr + Tp Tw] + Tc + Tb. Tb is then amortized across transactions as opposed being incurred on each transaction.

Assuming Tb = 200 ms (which may be considered reasonable given that an insert batch in a database with commit can do nearly 2000 TPS) and keeping the batch size the same - nearly 9.7 TPS and a 10.4 second ack or results time may be obtained. It is further noted that using two remote backup instances would not substantially alter these results.

It will be appreciated that because, for a given message, the alternative in-line embodiment must wait for the acknowledgment to come back from the backup instance before that message can be processed, the latency cost thereof is always incurred. In contrast, in the parallel implementation, message processing proceeds in parallel with the awaiting the return of the acknowledgment from the backup instance such that no latency cost is incurred where the message processing latency meets or exceeds the acknowledgment latency. One may view this as amortizing the acknowledgment latency cost across the entire primary processing pipeline.

While the disclosed embodiments will be discussed with respect to a single backup instance, it will be appreciated that more than one backup instance may be implemented to provide further redundancy. In one implementation, the disclosed embodiments are in direct communications with multiple backup instances, which may be geographically dispersed, wherein the disclosed embodiments interact with each of the backup systems in an identical manner as will be described. In an alternate implementation, an intermediary device or system may be implemented between the primary instance and one or more backup instances, where this intermediary device is responsible for interacting with the primary instance as described below to receive and acknowledge transactions, and further responsible for, on behalf of the disclosed embodiments, ensuring that those transactions are further reliably communicated to the one or more backup systems. In one embodiment, this intermediary device comprises a compute resource/data storage decoupler which provides transparent data transactional consistency across multiple databases, such as a Spanner instance provided by Google Inc. This intermediary device may be treated as a singular backup instance and absolves the disclosed embodiments from communicating and accounting for multiple backup instances as will be described. It will be appreciated that the disclosed embodiments may interact with multiple intermediary devices, each intermediating on behalf of one or more backup instances. In one implementation, the intermediary device may acknowledge transactions once committed to a threshold subset of the multiple backup instances, e.g., at least two, so as to optimize response time.

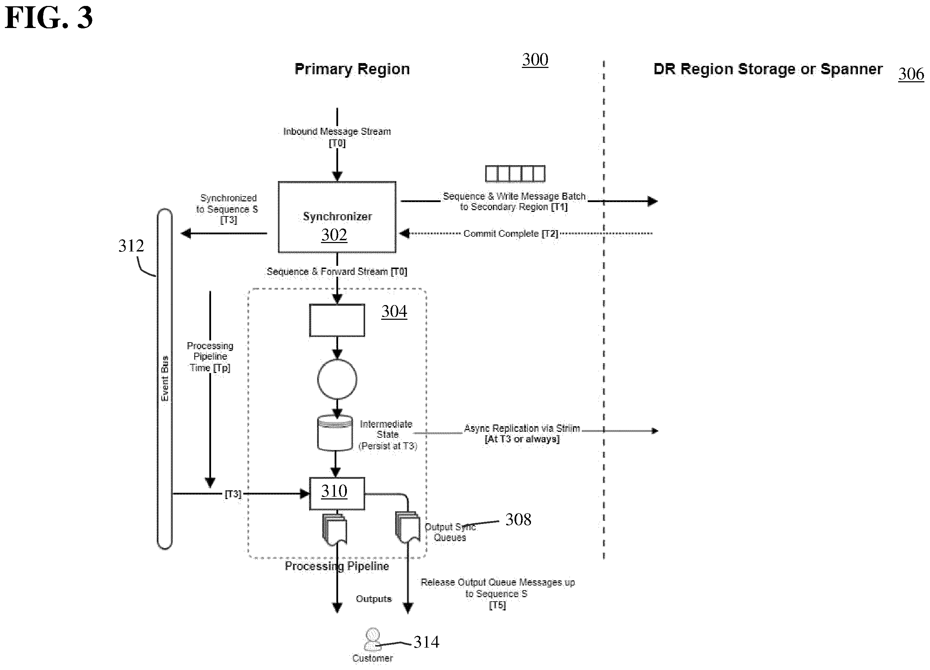

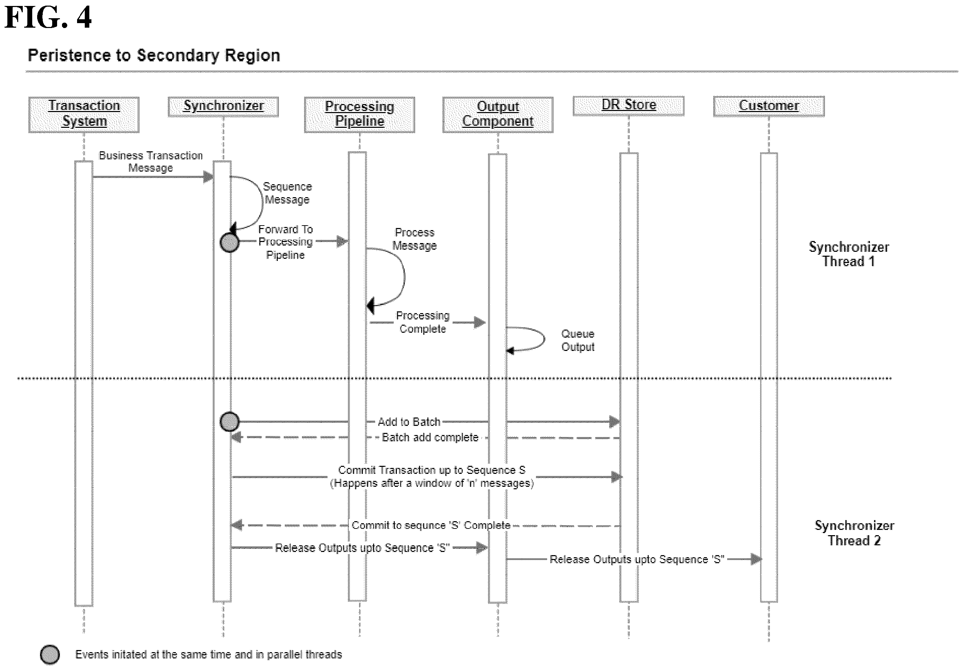

In particular, as shown in Figures 3 and 4, the disclosed embodiments, according to one implementation, may be implemented as a "synchronizer" 302 coupled with both the primary 304 instance and backup 306 instance(s) (or intermediary/Spanner) and which receives incoming transactions and assigns a sequence, such as a time stamp or other sequence notation, to each thereof relative to the other received transactions. Each sequenced transaction is then forwarded by the synchronizer 302 to the primary instance 304 for processing thereby. Copies of the forwarded sequenced transactions are also communicated to the backup instance(s) (or intermediary/Spanner) 306, either immediately, i.e., substantially in parallel with the forwarding to the primary instance 304, or in batches as will be described below, for processing thereby and acknowledgment thereof, i.e., of the commit of the transaction, back to the synchronizer 302.

In one implementation, batches of sequenced transactions are forwarded to the backup instance(s)/intermediary 306 for immediate processing/acknowledgment thereby, i.e., each batch includes an explicit or implicit directive to the backup instance(s)/intermediary 306 to process and acknowledge the transactions in the batch upon receipt. In an alternative implementation, the sequenced transactions are forwarded substantially immediately to the backup instance 306 but not processed thereby until directed to by the synchronizer 302. In either case, a single acknowledgment may be sent back for all of the messages in the batch.

Upon receipt by the primary instance 304, the primary instance 304 commences processing of the sequenced transactions to generate output/results based thereon. In one implementation, the primary instance 304 features a pipelined architectures which allows for the substantially simultaneous staged processing of multiple sequenced transactions, the final stage of which generates a result/output 308 of the processing of the transaction. As the outputs/results become available, the disclosed synchronizer 302 receives or otherwise regulates the communication/publication of those outputs to the recipient thereof such that the outputs/results are not communicated/published until the synchronizer 302 receives the acknowledgement from the backup instance(s)/intermediary 306 of receipt/processing of the corresponding sequenced transaction. In the case where the synchronizer 302 interacts directly with multiple backup instances 306, acknowledgment from all of the backup instances 306 may be required. In an alternate embodiment, acknowledgment from only a subset of the backup instances 306, such as at least one, a majority or super-majority, may be required.

In one embodiment, the primary instance 304 includes a buffer memory 310 which receives the outputs 308 and is responsive to a signal received from the synchronizer 302, such as via an event bus 312 or other communication channel, indicating that an acknowledgment of a particular transaction has been received from the backup instance(s)/intermediary 306 and, accordingly, the corresponding result/output 308 of the processing of that same transaction by the primary instance 304 may be released/communicated/published to the recipient/destination/consumer 314 thereof. In an alternative embodiment, the buffer memory 310 is a component of the synchronizer 302 and coupled between the primary instance 304 and the recipient/destination/consumers 314 of the outputs 308 thereof so as to be able to intercept and buffer those outputs 308. This alternative embodiment does not require that the primary instance 304 be modified to accommodate, or even be aware of, the synchronizer 302.

The synchronizer 302, e.g., using one processing thread, keeps track of the incoming transactions, such as in a log memory or database/data structure, not shown, whether, e.g., using another processing thread, receipt of those transactions by the backup instance(s)/intermediary 306 have been acknowledged and, e.g., using yet another processing thread, whether processing of those transactions by the primary instance 304 has completed. When both receipt of a transaction by the backup instance(s)/intermediary 306 has been acknowledged and processing of that transaction by the primary instance 304 has completed, the synchronizer 302 allows the processing results/outputs thereof to be released/published/communicated and the transaction may be removed from the log.

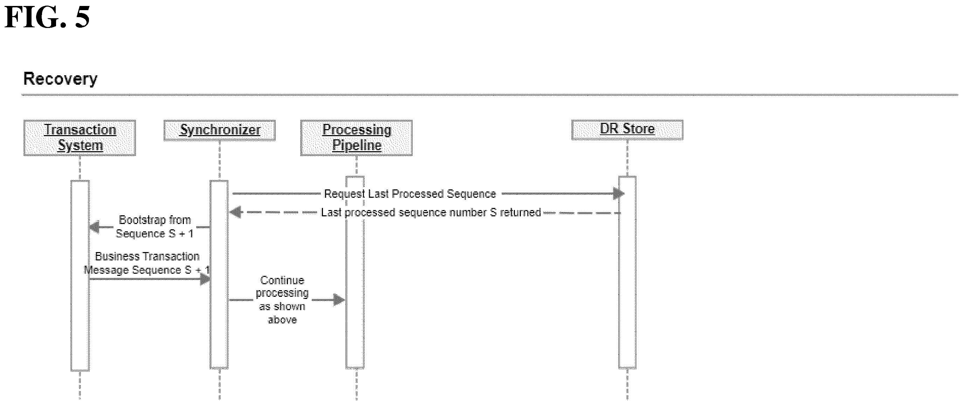

In the case of a failure, as shown in Figure 5, the sequence number/relative order of the last acknowledged/committed transaction T by the backup instance(s)/intermediary 306 can be determined and the log can then be used to determine which transactions, beginning with the next transaction in the sequence T+1, need to be reprocessed. It will be appreciated then, that the log memory need only be capable of storing a sufficient number of transactions as may be received and in process and/or unacknowledged at any given time. In one embodiment, the implementation of the synchronizer 302 may be tailored to the processing characteristics/implementation of the SOR for which it is providing resiliency, e.g., the capacity of the log may be limited to at least the maximum number of transactions that can currently be in the processing pipeline of the primary instance 304 at any one time. The log capacity, as described below, may include additional capacity to dynamically account for transactions for which processing has been completed by the primary instance 304 but an acknowledgement therefore has not yet been received. It will be appreciated that in situations where the backup instance(s)/intermediary 306 has failed or otherwise where acknowledgments therefrom cease to be received, the accumulation of unacknowledged outputs/results 308 exceeding a threshold may trigger a signal, e.g., a back pressure signal, to cause the transaction source to stop sending transactions, or otherwise signal for operator intervention. This threshold may be limited to one or may be defined, statically or dynamically, based on the number of messages batched together for acknowledgment as indicated above and described in more detail below. In an alternative embodiment, where the processing by the primary instance of one or more particular transactions has completed and the result/output has been generated but, due to a failure impeding the receipt of a corresponding acknowledgment, the corresponding acknowledgment does not arrive before it is determined to enter a recovery mode and restart, the output/result may be retained so as to avoid having to repeat the processing of those transactions by the primary instance, whereby only the transmission of those transactions to the backup system is repeated and the outputs are then released/published/communicated upon receipt of the corresponding acknowledgments.

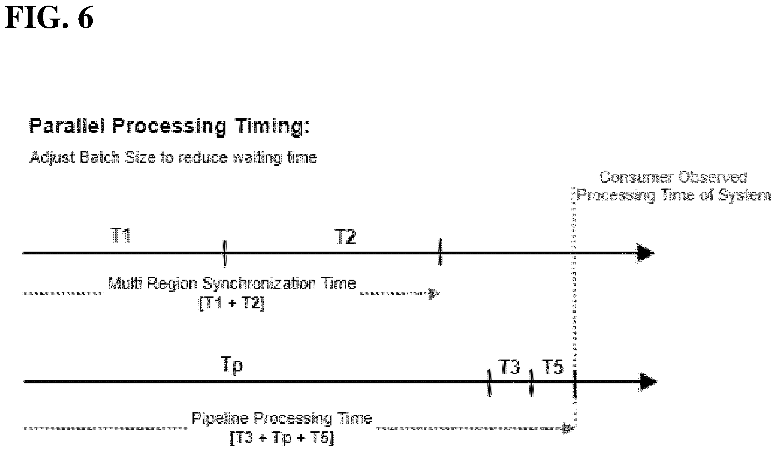

Generally, as shown in Figure 6, by regulating the communication/publication of the result/outputs of the primary instance 304 and not impeding the processing of transactions thereof, the impact on the operating performance of the primary instance 304 is minimized.

Furthermore, by sequencing the transactions upon receipt and using this sequencing to determine from which transaction to restart processing after a failure, the disclosed embodiments are not reliant on synchronizing the current state of the backup instance(s)/intermediary 306 to that of the primary instance 304 based on time, which as describe above, can be difficult in a cloud-based environment where the processing of an identical transactions by identical copies of processing system executing on different computing resources make take different amounts of time due to differentials in the overall processing loads on those computing resources at the time of processing, i.e., the processing latency thereof may appear, without cause, to dynamically expand/increase and contract/decrease.

It will be further appreciated that in order for the performance of the primary instance 304 and the consumer systems/device dependent thereon to be the least impacted, it is desirable to receive the acknowledgement for a given transaction from the backup instance(s)/intermediary 306 prior to or contemporaneous with the completion of processing and availability of the corresponding processing result/output of the primary instance 304 such that communication/publication of the processing result/output of the primary instance 304 is not impeded. However, as was noted above, the receipt of an acknowledgement message from the backup instance 306 is dependent upon the communications latency in communicating a copy of a transaction to the backup instance 306, the processing latency of the backup instance 306 to process, e.g., commit, the received transaction and generate the acknowledgement message based thereon, and the communications latency of communicating that acknowledgment message back to the synchronizer 302, all of which may vary dynamically.

In one embodiment, the disclosed synchronizer 302 can be implemented so as to both minimize bandwidth utilized, and account for the communications and processing latencies of obtaining the acknowledgment from the backup instance(s)/intermediary 306. For example, where the synchronizer 302 sends a copy of each transaction, upon receipt thereof, to the backup instance(s)/intermediary 306 which processes and acknowledges each transaction upon receipt, substantial bandwidth may be consumed of the communications medium used to convey these messages. This bandwidth utilization may cause congestion which may add additional latency. Furthermore, it may be processing-intensive to perform a single commit operation of a single transaction by the backup instance(s)/intermediary 306 as compared to performing a single commit operation of multiple transactions.

Accordingly, the disclosed embodiments may implement batching whereby multiple transactions are acknowledged/committed in a single operation resulting in a single acknowledgment. This reduces the number of acknowledgment messages being communicated back to the synchronizer 302, reducing bandwidth consumption, and reduces the processing latency of the backup instance(s)/intermediary 306, as compared to committing/acknowledging each transaction individually. It will be appreciated that a reduction in the number of acknowledgement messages being communicated may result in a linear reduction of the consumption of bandwidth. However, the batching of multiple transactions together for a single commit operation may not have a linear relationship to the reduction in processing latency thereof, e.g., when the number of transactions to be committed in a single operation exceeds a threshold, the processing latency thereof may start to increase as compared with a lesser number. As was described above, batching may be implemented in two ways. In one implementation, the synchronizer 302 collects and transmits multiple transactions to the backup instance(s)/intermediary 306 along with an explicit or implicit request for the backup instance(s)/intermediary 306 to acknowledge all of those transactions with a single response. In an alternative embodiment, the synchronizer 302 forward each transaction to the backup instance(s)/intermediary 306 which is configured to accumulate those transactions and only commit/acknowledge them upon receipt of a request to do so from the synchronizer 302. When the synchronizer 302 is ready for the backup instance(s)/intermediary 306 to commit/acknowledge the accumulated transactions with a single response/acknowledgement, it sends the appropriate request.

As will be appreciated, in either implementation, the synchronizer 302 is control of the batch size, i.e., the number of transactions for which the backup instance(s)/intermediary 306 can issue a single response/acknowledgement. While in one embodiment, this batch size may be statically defined, e.g., based on known static communications and processing latencies of the primary instance and/or the backup instance(s)/intermediary 306, in an alternative embodiment, the batch size is dynamic and adaptively managed based on current communications and processing latencies. It will be appreciated that, as was described, until a given transaction is acknowledged, if a failure occurs that transaction will need to be re-processed. Accordingly, it can be seen that the larger the size of the batch, the more transactions that will need to be reprocessed in the event of a failure which occurs before that batch can be acknowledged.

More particularly, as was noted above, for optimal overall system performance it may be desirable to receive an acknowledgment for a given transaction prior to or at least contemporaneous with the completion of processing by the primary instance 304 and availability of the results/outputs 308 thereof so that those outputs 308 can be released to their destination without any additional delay. Further as was noted, the processing of a transaction by the primary instance 304 is subject to a processing latency, which may dynamically vary based on the overall processing load of the computing resource hosting the primary instance 304. Furthermore, the receipt of the acknowledgment from the backup instance(s)/intermediary 306 is subject to the sum of the communications and processing latencies as was described above, and these latencies are further dependent upon the number of transactions batched together for processing, etc. Accordingly, by managing the batch size, such as based on monitoring of the current acknowledgment latency of most recently received acknowledgement(s), the synchronizer 302 can exert some control over the overall acknowledgment latency. This managing of the size of the batch can further be balanced against the number of transactions which would need to be reprocessed in the event of a failure occurring before that batch of transactions can be acknowledged. Wherein the synchronizer 302 merely needs to ensure that the overall acknowledgement latency is equal to or less than the processing latency of the primary instance 304, the optimum batch size can be the minimum size, to minimize the number of outstanding unacknowledged transactions, which meets that latency goal. For example, where primary instance's 304 processing throughput is 100 transactions per second and the overall remote commit/acknowledgment latency is 20ms, the optimum batch size may be 5. As the primary instance 304 processing latency and the overall acknowledgment latency varies, based not only on the batch size but also on other factors as described above, the synchronizer 302 can adjust the batch size of the next batch of transactions to accommodate for that variance, e.g., when the synchronizer 302 determines that acknowledgments are starting to arrive late, i.e., after the corresponding processing results are available. While in this embodiment, the synchronizer 302 may be seen as reactive to past variances in adjusting for future acknowledgments, in an alternative embodiment, proactive management of batch size may be implemented, instead or in addition thereto, using predictive mechanisms, such as machine learning or simple scheduling (such as based on known busy periods), to anticipate processing and/or communications latency variations and adjust the batch size based thereon.

In some implementations of an application/system having a pipelines architecture, the processing of a particular transaction by one or more of the intermediate processing stages may produce intermediate outputs which need to be backed up in the case of a failure occurring before the processing of that transaction is completed and the outputs/results thereof communicated/published to their destination. This may be implemented in two ways.

In one implementation, if the pipeline components produce intermediate state that must be persisted, the intermediate pipeline state(s) are replicated to the backup instance(s)/intermediary 306 always asynchronously. In case of a failure event, the system would need to roll-back these intermediate state(s) to the last acknowledged transaction in the sequence. Alternatively, the intermediate state associated with the stateful component(s) is held back from replication to the backup instance(s)/intermediary 306. In this case, the state can only be committed when the pipeline has received an acknowledgement of the transaction for the corresponding transaction. In case the of a failure while the intermediate state is being persisted to the backup instance(s)/intermediary 306, then upon recovery the pipeline will need to restart processing from the sequence transaction corresponding to the last persisted intermediate state(s).

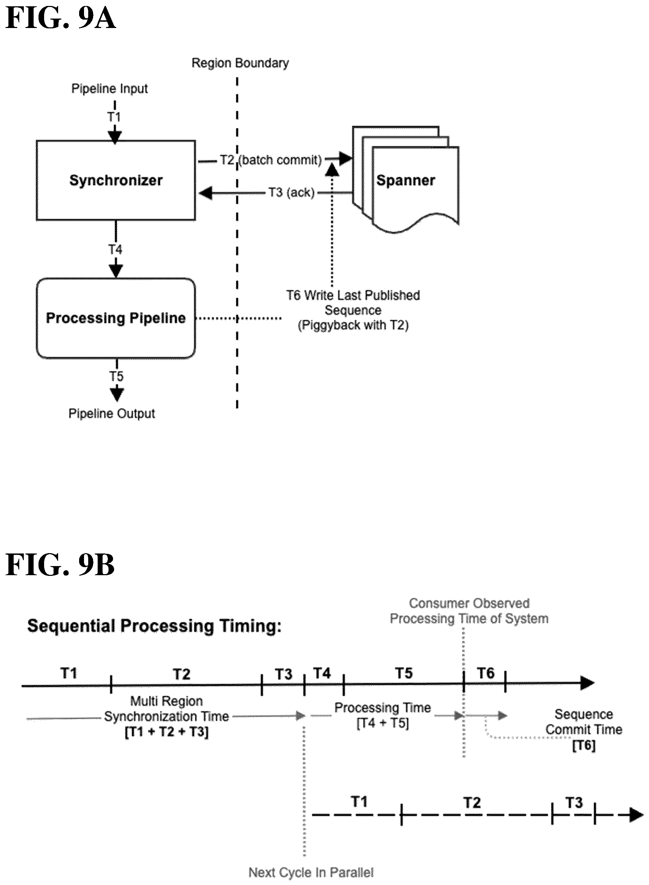

In an alternative embodiment, as described above and as shown in Figures 9A and 9B and 12A, a synchronizer 902 is coupled with both the primary 904 instance and backup 906 instance(s) (or intermediary/Spanner) and which receives incoming transactions and assigns a sequence, such as a time stamp or other sequence notation, to each thereof relative to the other received transactions. Each sequenced transaction is then stored in a buffer memory (not shown) until a threshold number, e.g., 500, messages have been accumulated therein, or a threshold amount of time e.g., 5 ms, has elapsed. Upon accumulating the threshold number of messages or elapse of the timer, copies of the accumulated messages are batched together and forwarded to the backup instance(s)/intermediary 906. Accumulation of subsequently received messages in another buffer then may commence subject to the same quantity/time thresholds. Upon receipt of an acknowledgment message from the backup 906, e.g., acknowledging that the batch of messages previously communicated thereto have been committed, the synchronizer forwards each of the messages of the corresponding batch from the buffer memory to the primary instance 904 in the sequenced order.

In one implementation, batches of sequenced transactions are forwarded to the backup instance(s)/intermediary 906 for immediate processing/acknowledgment thereby, i.e., each batch includes an explicit or implicit directive to the backup instance(s)/intermediary 306 to process and acknowledge the transactions in the batch upon receipt. In an alternative implementation, the sequenced transactions are forwarded substantially immediately to the backup instance 306 but not processed thereby until directed to by the synchronizer 302. In either case, a single acknowledgment may be sent back for all of the messages in the batch.

In the case where the synchronizer 902 interacts directly with multiple backup instances 906, acknowledgment from all of the backup instances 906 may be required. In an alternate embodiment, acknowledgment from only a subset of the backup instances 906, such as at least one, a majority or super-majority, may be required.

Upon receipt by the primary instance 304, the primary instance 304 commences processing of the sequenced transactions to generate output/results based thereon. In one implementation, the primary instance 304 features a pipelined architectures which allows for the substantially simultaneous staged processing of multiple sequenced transactions, the final stage of which generates a result/output 308 of the processing of the transaction. As the outputs/results become available, they are immediately communicated to the recipients/consumers thereof.

The synchronizer 902 further monitors the outputs of the primary instance 904 to track which outputs/results have been communicated, such as by sequence number of the corresponding transaction thereto whose successful processing resulted in the output/result. This data may be stored in a memory (not shown). Periodically, the synchronizer 902 communicates data indicative of the most recently successfully processed transaction, e.g., the currently stored sequence number of the most recently successfully processed transaction, to the backup instance 906. This data may be communicated as part of the communication of a batch of incoming messages for acknowledgment, i.e., "piggy backed," or as a separate communication. The frequency of communication is implementation dependent and may be as frequent as each output is communicated. The sequence number communicated to the backup instance 906 informs the backup instance 906 where to begin re-processing transactions when recovering from a failure, i.e., from the transaction having the next subsequent sequence number,

The synchronizer 902, e.g., using one processing thread, stores incoming transaction messages in a buffer memory (not shown) upon receipt. A counter, or other mechanism, may be maintained for determining when a threshold number of messages have been accumulated in the buffer memory. A timer process/mechanism may further determine if a defined period of time has elapsed prior to the threshold number of messages being accumulated. When either the threshold number of transactions has been accumulated or the time period for accumulation has elapsed, copies of the accumulated messages are transmitted, e.g., by the same or another processing thread, to the backup instance 906, either as a batch or one at a time. This process, or another process may then wait for a corresponding acknowledgement message from the backup instance 906 to be returned. A timer may be implemented to determine when the acknowledgment has not been returned for a threshold period of time, indicative of a failure of either the backup instance 906 or at least a portion of the communications infrastructure between the synchronizer 902 or backup instance 906. As will be described, the threshold number of messages and/or the defined period of time may be statically defined or one or both may be dynamically defined, such as based on the then current or historical latency in receiving acknowledgment messages from the backup instance 906 and/or the then current or historical processing latency of the primary instance 904.

During the waiting period for the acknowledgment, subsequently received transaction messages may be received and accumulated in another buffer memory subject to the quantity and time thresholds as described above.

Upon receipt of an acknowledgment message from the backup instance 906, one of the processes described above, or a new process, may confirm that the acknowledgment corresponds to a currently pending accumulation of transaction messages and, upon such confirmation, convey each of the accumulated transaction messages, in the sequenced order, from the memory buffer to the primary instance for processing thereby.

Another process operated by the synchronizer 902 may be coupled with the output of the primary instance 904 so as to be privy to the outputs/results communicated thereby, and accounts for each output/result message generated thereby indicative of the successful processing of the corresponding transaction message, storing, for example, the sequence number of at least the most recently successfully processed transaction message. Periodically, e.g., upon communication of each output, after communication of a threshold number of outputs and/or after elapse of a defined period of time, the synchronizer 902 transmits the sequence number of the most recently successfully processed transaction message to the backup instance 906. In case of failure, the backup instance 906 will know to begin recovery and re-processing of the next sequenced transaction following the most recently successfully processed transaction indicated by the synchronizer 902. The sequence number of the most recently successfully processed transaction message nay be transmitted along with a batch of transaction messages, i.e., piggy backed, or separately transmitted.

As shown in Figure 12B, upon determination of a failure of the primary instance 904, the backup instance 906, so as recover from the failure, may determine the most recently successfully processed transaction it is aware of, i.e., the most recently received sequence number indicative thereof. The backup instance 906 may then begin processing transactions in place of the primary instance 904 starting with the next sequenced transaction message. It will be appreciated that the primary instance 904, as described above, may have successfully processed and transmitted outputs/results for transactions beyond the transaction which was most recently reported to the backup instance 906. In that case, the backup instance 906 may re-process those transactions causing the transmission of duplicative results. Recipients/consumers of outputs/result messages must be tolerant of receiving duplicative messages such as by tracking the corresponding transaction sequence numbers of the received result messages.

It will be appreciated that in situations where the backup instance(s)/intermediary 906 has failed or otherwise where acknowledgments therefrom cease to be received, the elapse of a threshold time period as described above, or the accumulation of unacknowledged incoming transaction messages exceeding a threshold amount may trigger a signal, e.g., a back pressure signal, to cause the transaction source to stop sending transactions, e.g., to buffer them up stream, or otherwise signal for operator intervention. This threshold may be limited to one or may be defined, statically or dynamically, based on the number of messages batched together for acknowledgment as indicated above and described in more detail below.

Generally, as shown in Figure 9B, by regulating the processing of transactions by the primary instance 904 as described, the performance of the primary instance 904 becomes dependent upon the latency in receiving acknowledgments from the backup instance 906. However, as noted above, where that latency is less than the processing latency of the primary instance 904, transactions subsequent to the first batch of transactions should see minimal if not zero additional latency impact as they will be ready for processing by the primary instance 904 before the primary instance 904 has completed processing the prior batch of transactions.

Furthermore, similar to the other embodiments described herein, by sequencing the transactions upon receipt and using this sequencing to determine from which transaction to restart processing after a failure, the disclosed embodiments are not reliant on synchronizing the current state of the backup instance(s)/intermediary 906 to that of the primary instance 904 based on time, which as describe above, can be difficult in a cloud-based environment where the processing of an identical transactions by identical copies of processing system executing on different computing resources may take different amounts of time due to differentials in the overall processing loads on those computing resources at the time of processing, i.e., the processing latency thereof may appear, without cause, to dynamically expand/increase and contract/decrease.

It will be further appreciated that in order for the performance of the primary instance 904 and the consumer systems/device dependent thereon to be the least impacted, it is desirable to receive the acknowledgement for a given transaction from the backup instance(s)/intermediary 906 prior to or contemporaneous with the completion of processing of the prior batch of transactions such that the processing of the next batch of transactions by the primary instance 904 is not impeded. However, as was noted above, the receipt of an acknowledgement message from the backup instance 906 is dependent upon the communications latency in communicating a copy of a transaction, or batch thereof, to the backup instance 906, the processing latency of the backup instance 906 to process, e.g., commit, the received transaction(s) and generate the acknowledgement message based thereon, and the communications latency of communicating that acknowledgment message back to the synchronizer 902, all of which may vary dynamically.

In one embodiment, as was described above, the disclosed synchronizer 902 can be implemented so as to both minimize bandwidth utilized, and account for the communications and processing latencies of obtaining the acknowledgment from the backup instance(s)/intermediary 906. For example, where the synchronizer 902 sends a copy of each transaction, upon receipt thereof, to the backup instance(s)/intermediary 906 which processes and acknowledges each transaction upon receipt, substantial bandwidth may be consumed of the communications medium used to convey these messages. This bandwidth utilization may cause congestion which may add additional latency. Furthermore, it may be processing-intensive to perform a single commit operation of a single transaction by the backup instance(s)/intermediary 906 as compared to performing a single commit operation of multiple transactions.

Accordingly, the disclosed embodiments may implement batching whereby multiple transactions are acknowledged/committed in a single operation resulting in a single acknowledgment. This reduces the number of acknowledgment messages being communicated back to the synchronizer 902, reducing bandwidth consumption, and reduces the processing latency of the backup instance(s)/intermediary 906, as compared to committing/acknowledging each transaction individually. It will be appreciated that a reduction in the number of acknowledgement messages being communication may result in a linear reduction of the consumption of bandwidth. However, the batching of multiple transactions together for a single commit operation may not have a linear relationship to the reduction in processing latency thereof, e.g., when the number of transactions to be committed in a single operation exceeds a threshold, the processing latency thereof may start to increase as compared with a lesser number. As was described above, batching may be implemented in two ways. In one implementation, the synchronizer 902 collects and transmits the accumulated batch of transactions to the backup instance(s)/intermediary 906 along with an explicit or implicit request for the backup instance(s)/intermediary 906 to acknowledge all of those transactions with a single response. In an alternative embodiment, the synchronizer 902 forward each transaction, as it is received and accumulated, to the backup instance(s)/intermediary 906 which is configured to, itself, accumulate those transactions and only commit/acknowledge them upon receipt of a request to do so from the synchronizer 902. When the synchronizer 902 is ready for the backup instance(s)/intermediary 906 to commit/acknowledge the accumulated transactions with a single response/acknowledgement, it sends the appropriate request.

As will be appreciated, in either implementation, the synchronizer 902 is in control of the batch size, i.e., the number of transactions for which the backup instance(s)/intermediary 306 can issue a single response/acknowledgement. While in one embodiment, this batch size may be statically defined, e.g., based on known static communications and processing latencies of the primary instance and/or the backup instance(s)/intermediary 906, in an alternative embodiment, the batch size is dynamic and adaptively managed based on current communications and processing latencies. It will be appreciated that, as was described, until a given batch of transactions is acknowledged, processing thereof by the primary instance 904 cannot commence. Accordingly, it can be seen that the larger the size of the batch, the longer the primary instance 904 may be idle awaiting transactions to process.

More particularly, as was noted above, for optimal overall system performance it may be desirable to receive an acknowledgment for a given batch of transactions prior to or at least contemporaneous with the completion of processing by the primary instance 304 of the prior batch of transactions. Further as was noted, the processing of a transaction by the primary instance 904 is subject to a processing latency, which may dynamically vary based on the overall processing load of the computing resource hosting the primary instance 904. Furthermore, the receipt of the acknowledgment from the backup instance(s)/intermediary 906 is subject to the sum of the communications and processing latencies as was described above, and these latencies are further dependent upon the number of transactions batched together for processing, etc. Accordingly, by managing the batch size, such as based on monitoring of the current acknowledgment latency of most recently received acknowledgement(s), the synchronizer 902 can exert some control over the overall acknowledgment latency. This managing of the size of the batch can further be balanced against the delay imposed on the primary instance 904. Wherein the synchronizer 902 merely needs to ensure that the overall acknowledgement latency is equal to or less than the processing latency of the primary instance 904, the optimum batch size can be the minimum size, to minimize the waiting time of the primary instance 904, which meets that latency goal. For example, where primary instance's 304 processing throughput is 100 transactions per second and the overall remote commit/acknowledgment latency is 20ms, the optimum batch size may be 5. As the primary instance 904 processing latency and the overall acknowledgment latency varies, based not only on the batch size but also on other factors as described above, the synchronizer 902 can adjust the batch size of the next batch of transactions to accommodate for that variance, e.g., when the synchronizer 902 determines that acknowledgments are starting to arrive late, i.e., after the prior transaction batch has been completely processed by the primary instance 904. While in this embodiment, the synchronizer 902 may be seen as reactive to past variances in adjusting for future acknowledgments, in an alternative embodiment, proactive management of batch size may be implemented, instead or in addition thereto, using predictive mechanisms, such as machine learning or simple scheduling (such as based on known busy periods), to anticipate processing and/or communications latency variations and adjust the batch size based thereon.

In some implementations of an application/system having a pipelines architecture, the processing of a particular transaction by one or more of the intermediate processing stages may produce intermediate outputs which need to be backed up in the case of a failure occurring before the processing of that transaction is completed and the outputs/results thereof communicated/published to their destination. While, in the inline implementation, the intermediate state of the backup instance will not get ahead of the last acknowledged transaction, this intermediate state could still be behind the last acknowledged transaction. This backup of the intermediate state of the primary instance may then be implemented in two ways.

In one implementation, if the pipeline components produce intermediate state that must be persisted, the intermediate pipeline state(s) are replicated to the backup instance(s)/intermediary 306 always asynchronously. In case of a failure event in which the asynchronously replicated intermediate state is ahead of the replicated transactional state, the system would need to roll-back these intermediate state(s) to the last acknowledged transaction in the sequence. Alternatively, the intermediate state associated with the stateful component(s) is held back from replication to the backup instance(s)/intermediary 306. In this case, the state can only be committed when the pipeline has received an acknowledgement of the transaction for the corresponding transaction. In case the of a failure while the intermediate state is being persisted to the backup instance(s)/intermediary 306, then upon recovery the pipeline will need to restart processing from the sequence transaction corresponding to the last persisted intermediate state(s).

The provision of a failure recovery system for a transaction processing system which minimize, if not eliminate, both the amount of data, i.e., the number of transactions, which can be lost during a failure and the performance impact on the system is a technical implementation and problems therewith, such as data loss, processing and communications latency variation, processing performance degradation, are technical problems which can affect computer processes and systems which rely on electronic message based communication for operation. As such, the disclosed embodiments provide technical solutions to these technical problems.

The disclosed embodiments provide an improved system resiliency and disaster recovery mechanism for a deterministic transaction processing system which can adaptively accommodate processing and communications latencies, particularly in a cloud/shared resource deployment, to mitigate data loss and performance impact while minimizing failure recovery costs, and therefore provide a specific and practical application which improves upon prior messaging platforms and provides additional functionality not previously provided.

The disclosed embodiments solve problems which uniquely arise in the fields of computer technology and electronic communication. This the disclosed embodiments are rooted in computer technology in order to overcome problems specifically arising in computer systems and inter-process communications. Indeed, the subject technology improves the functioning of the computer by, for example, minimizing, if not eliminate, both the amount of data, i.e., the number of transactions, which can be lost during a failure, the performance impact on the system and the costs to recover in the event of failure.

### CLEARING HOUSE

The clearing house of an exchange clears, settles and guarantees matched transactions in contracts occurring through the facilities of the exchange. In addition, the clearing house establishes and monitors financial requirements for clearing members and conveys certain clearing privileges in conjunction with the relevant exchange markets. The clearing house may implement the FEC system described above utilizing the disclosed embodiments in concert with the above-described Clearing Message Broker ("CMB").

The clearing house establishes clearing level performance bonds (margins) for all products of the exchange and establishes minimum performance bond requirements for customers of such products. A performance bond, also referred to as a margin requirement, corresponds with the funds that must be deposited by a customer with his or her broker, by a broker with a clearing member or by a clearing member with the clearing house, for the purpose of insuring the broker or clearing house against loss on open futures or options contracts. This is not a part payment on a purchase. The performance bond helps to ensure the financial integrity of brokers, clearing members and the exchange as a whole. The performance bond refers to the minimum dollar deposit required by the clearing house from clearing members in accordance with their positions. Maintenance, or maintenance margin, refers to a sum, usually smaller than the initial performance bond, which must remain on deposit in the customer's account for any position at all times. The initial margin is the total amount of margin per contract required by the broker when a futures position is opened. A drop in funds below this level requires a deposit back to the initial margin levels, i.e., a performance bond call. If a customer's equity in any futures position drops to or under the maintenance level because of adverse price action, the broker must issue a performance bond/margin call to restore the customer's equity. A performance bond call, also referred to as a margin call, is a demand for additional funds to bring the customer's account back up to the initial performance bond level whenever adverse price movements cause the account to go below the maintenance.

The exchange derives its financial stability in large part by removing debt obligations among market participants as they occur. This is accomplished by determining a settlement price at the close of the market each day for each contract and marking all open positions to that price, referred to as "mark to market." Every contract is debited or credited based on that trading session's gains or losses. As prices move for or against a position, funds flow into and out of the trading account. In the case of the CME, each business day by 6:40 a.m. Chicago time, based on the mark-to-the-market of all open positions to the previous trading day's settlement price, the clearing house pays to or collects cash from each clearing member. This cash flow, known as settlement variation, is performed by CME's settlement banks based on instructions issued by the clearing house. All payments to and collections from clearing members are made in "same-day" funds. In addition to the 6:40 a.m. settlement, a daily intra-day mark-to-the market of all open positions, including trades executed during the overnight GLOBEXO, the CME's electronic trading systems, trading session and the current day's trades matched before 11:15 a.m., is performed using current prices. The resulting cash payments are made intra-day for same day value. In times of extreme price volatility, the clearing house has the authority to perform additional intra-day mark-to-the-market calculations on open positions and to call for immediate payment of settlement variation. CME's mark-to-the-market settlement system may differ from the settlement systems implemented by many other financial markets, including the interbank, Treasury securities, over-the-counter foreign exchange and debt, options, and equities markets, where participants regularly assume credit exposure to each other. In those markets, the failure of one participant can have a ripple effect on the solvency of the other participants. Conversely, CME's mark-to-the-market system may not allow losses to accumulate over time or allow a market participant the opportunity to defer losses associated with market positions.

While the disclosed embodiments may be described in reference to the CME, it should be appreciated that these embodiments are applicable to any exchange. Such other exchanges may include a clearing house that, like the CME clearing house, clears, settles and guarantees all matched transactions in contracts of the exchange occurring through its facilities. In addition, such clearing houses establish and monitor financial requirements for clearing members and convey certain clearing privileges in conjunction with the relevant exchange markets.

The disclosed embodiments are also not limited to uses by a clearing house or exchange for purposes of exchanging clearing related messages. The disclosed embodiments may also be used by other components to facilitate internal or external inter- or intra-process communication.

### COMPUTING ENVIRONMENT

The embodiments may be described in terms of a distributed computing system. The particular examples identify a specific set of components useful in a futures and options exchange. However, many of the components and inventive features are readily adapted to other electronic trading environments. The specific examples described herein may teach specific protocols and/or interfaces, although it should be understood that the principles involved may be extended to, or applied in, other protocols and interfaces.

It should be appreciated that the plurality of entities utilizing or involved with the disclosed embodiments, e.g., the market participants, may be referred to by other nomenclature, such as clearing firm or clearing entity, reflecting the role that the particular entity is performing with respect to the disclosed embodiments and that a given entity may perform more than one role depending upon the implementation and the nature of the particular transaction being undertaken, as well as the entity's contractual and/or legal relationship with another market participant and/or the exchange.

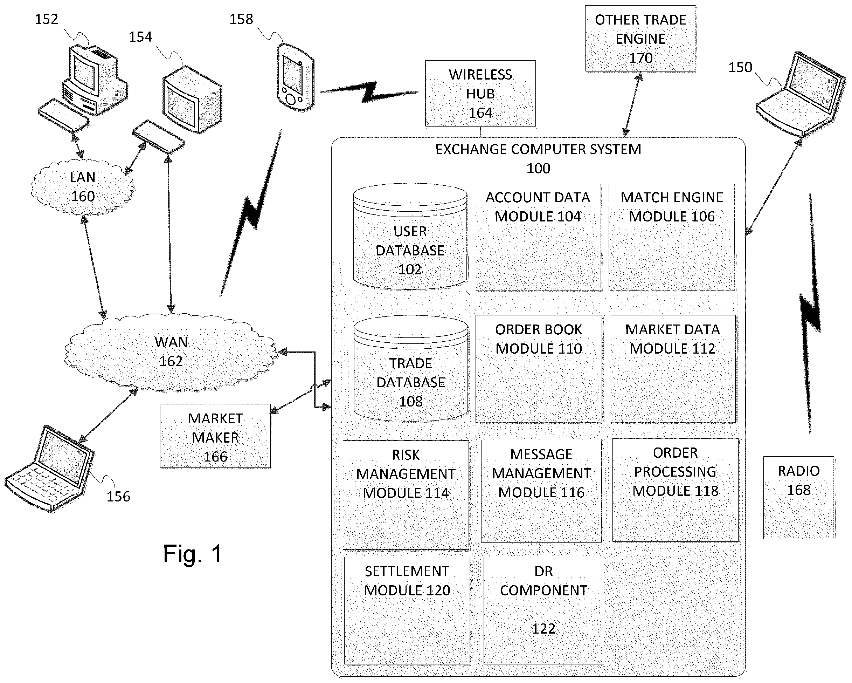

An exemplary trading network environment for implementing trading systems and methods, including the functions of the clearing house described above, is shown in Fig. 1. An exchange computer system 100 receives messages that include orders and transmits market data related to orders and trades to users, such as via wide area network 162 and/or local area network 160 and computer devices 150, 152, 154, 156 and 158, as described herein, coupled with the exchange computer system 100.

Herein, the phrase "coupled with" is defined to mean directly connected to or indirectly connected through one or more intermediate components. Such intermediate components may include both hardware and software-based components. Further, to clarify the use in the pending claims and to hereby provide notice to the public, the phrases "at least one of <A>, <B>, ... and <N>" or "at least one of <A>, <B>, ... <N>, or combinations thereof' are defined by the Applicant in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

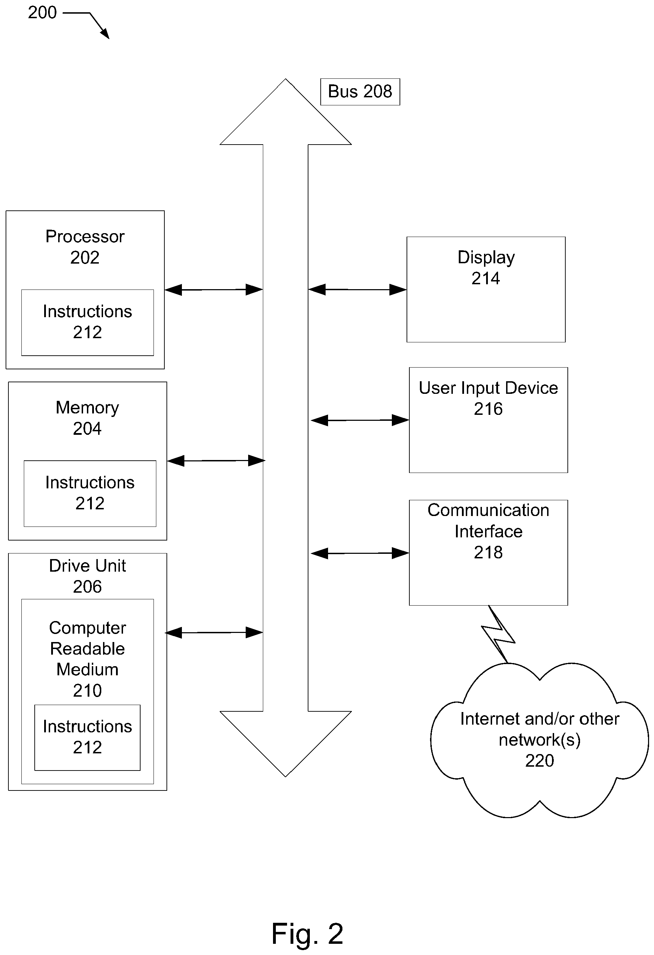

The exchange computer system 100 may be implemented with one or more mainframe, desktop, or other computers, such as the example computer 200 described herein with respect to Fig 2. A user database 102 may be provided which includes information identifying traders and other users of exchange computer system 100, such as account numbers or identifiers, usernames, and passwords. An account data module 104 may be provided which may process account information that may be used during trades.

A match engine module 106 may be included to match bid and offer prices and may be implemented with software that executes one or more algorithms for matching bids and offers. A trade database 108 may be included to store information identifying trades and descriptions of trades. In particular, trade database 108 may store information identifying the time that a trade took place and the contract price.

An order book module 110 may be included to compute or otherwise determine current bid and offer prices, e.g., in a continuous auction market, or also operate as an order accumulation buffer for a batch auction market.

A market data module 112 may be included to collect market data and prepare the data for transmission to users. For example, the market data module 112 may prepare the market data feeds described herein.

A risk management module 114 may be included to compute and determine a user's risk utilization in relation to the user's defined risk thresholds. The risk management module 114 may also be configured to determine risk assessments or exposure levels in connection with positions held by a market participant. The risk management module 114 may be configured to administer, manage, or maintain one or more margining mechanisms implemented by the exchange computer system 100. Such administration, management or maintenance may include managing a number of database records reflective of margin accounts of the market participants. In some embodiments, the risk management module 114 implements one or more aspects of the disclosed embodiments, including, for instance, principal component analysis (PCA) based margining, in connection with interest rate swap (IRS) portfolios, as described herein.

A message management module 116 may be included to, among other things, receive, and extract orders from, electronic data transaction request messages. The message management module 116 may define a point of ingress into the exchange computer system 100 where messages are ordered and considered to be received by the system. This may be considered a point of determinism in the exchange computer system 100 that defines the earliest point where the system can ascribe an order of receipt to arriving messages. The point of determinism may or may not be at or near the demarcation point between the exchange computer system 100 and a public/internet network infrastructure. The message management module 116 processes messages by interpreting the contents of a message based on the message transmit protocol, such as the transmission control protocol ("TCP"), to provide the content of the message for further processing by the exchange computer system.

The message management module 116 may also be configured to detect characteristics of an order for a transaction to be undertaken in an electronic marketplace. For example, the message management module 116 may identify and extract order content such as a price, product, volume, and associated market participant for an order. The message management module 116 may also identify and extract data indicating an action to be executed by the exchange computer system 100 with respect to the extracted order. For example, the message management module 116 may determine the transaction type of the transaction requested in a given message. A message may include an instruction to perform a type of transaction. The transaction type may be, in one embodiment, a request/offer/order to either buy or sell a specified quantity or units of a financial instrument at a specified price or value. The message management module 116 may also identify and extract other order information and other actions associated with the extracted order. All extracted order characteristics, other information, and associated actions extracted from a message for an order may be collectively considered an order as described and referenced herein.

Order or message characteristics may include, for example, the state of the system after a message is received, arrival time (e.g., the time a message arrives at the Market Segment Gateway ("MSG") that is the point of ingress/entry and/or egress/departure for all transactions, i.e., the network traffic/packets containing the data therefore), message type (e.g., new, modify, cancel), and the number of matches generated by a message. Order or message characteristics may also include market participant side (e.g., buyer or seller) or time in force (e.g., a good until end of day order that is good for the full trading day, a good until canceled ordered that rests on the order book until matched, or a fill or kill order that is canceled if not filled immediately, or a fill and kill order (FOK) that is filled to the maximum amount possible based on the state of the order book at the time the FOK order is processed, and any remaining or unfilled/unsatisfied quantity is not stored on the books or allowed to rest).

An order processing module 118 may be included to decompose delta-based, spread instrument, bulk, and other types of composite orders for processing by the order book module 110 and/or the match engine module 106. The order processing module 118 may also be used to implement one or more procedures related to clearing an order. The order may be communicated from the message management module 116 to the order processing module 118. The order processing module 118 may be configured to interpret the communicated order, and manage the order characteristics, other information, and associated actions as they are processed through an order book module 110 and eventually transacted on an electronic market. For example, the order processing module 118 may store the order characteristics and other content and execute the associated actions. In an embodiment, the order processing module 118 may execute an associated action of placing the order into an order book for an electronic trading system managed by the order book module 110. In an embodiment, placing an order into an order book and/or into an electronic trading system may be considered a primary action for an order. The order processing module 118 may be configured in various arrangements, and may be configured as part of the order book module 110, part of the message management module 116, or as an independent functioning module.

As an intermediary to electronic trading transactions, the exchange bears a certain amount of risk in each transaction that takes place. To that end, the clearing house implements risk management mechanisms to protect the exchange. One or more of the modules of the exchange computer system 100 may be configured to determine settlement prices for constituent contracts, such as deferred month contracts, of spread instruments, such as for example, settlement module 120. A settlement module 120 (or settlement processor or other payment processor) may be included to provide one or more functions related to settling or otherwise administering transactions cleared by the exchange. Settlement module 120 of the exchange computer system 100 may implement one or more settlement price determination techniques. Settlement-related functions need not be limited to actions or events occurring at the end of a contract term. For instance, in some embodiments, settlement-related functions may include or involve daily or other mark to market settlements for margining purposes. In some cases, the settlement module 120 may be configured to communicate with the trade database 108 (or the memory(ies) on which the trade database 108 is stored) and/or to determine a payment amount based on a spot price, the price of the futures contract or other financial instrument, or other price data, at various times. The determination may be made at one or more points in time during the term of the financial instrument in connection with a margining mechanism. For example, the settlement module 120 may be used to determine a mark to market amount on a daily basis during the term of the financial instrument. Such determinations may also be made on a settlement date for the financial instrument for the purposes of final settlement.

In some embodiments, the settlement module 120 may be integrated to any desired extent with one or more of the other modules or processors of the exchange computer system 100. For example, the settlement module 120 and the risk management module 114 may be integrated to any desired extent. In some cases, one or more margining procedures or other aspects of the margining mechanism(s) may be implemented by the settlement module 120.

A disaster recovery (DR) module 122, shown in more detail in Fig. 4 described in more detail below, may be included to, using the disclosed embodiments, implement, facilitate and manage both the reliable replication of transactions/state of the FEC and/or other systems of the exchange computer system 100 and, in the event of a failure, the recovery thereof, e.g., among those modules which implement the clearing functions, as well as with other modules or components of the exchange computer system 100, as described herein. This DR module may be part of, or include, a messaging module, not shown, which implements inter-component message communication.

One or more of the above-described modules of the exchange computer system 100 may be used to gather or obtain data to support the settlement price determination, as well as a subsequent margin requirement determination. For example, the order book module 110 and/or the market data module 112 may be used to receive, access, or otherwise obtain market data, such as bid-offer values of orders currently on the order books. The trade database 108 may be used to receive, access, or otherwise obtain trade data indicative of the prices and volumes of trades that were recently executed in a number of markets. In some cases, transaction data (and/or bid/ask data) may be gathered or obtained from open outcry pits and/or other sources and incorporated into the trade and market data from the electronic trading system(s). It should be appreciated that concurrent processing limits may be defined by or imposed separately or in combination on one or more of the trading system components.

The disclosed mechanisms may be implemented at any logical and/or physical point(s), or combinations thereof, at which the relevant information/data (e.g., message traffic and responses thereto) may be monitored or flows or is otherwise accessible or measurable, including one or more gateway devices, modems, the computers or terminals of one or more market participants, e.g., client computers, etc.

One skilled in the art will appreciate that one or more modules described herein may be implemented using, among other things, a tangible computer-readable medium comprising computer-executable instructions (e.g., executable software code). Alternatively, modules may be implemented as software code, firmware code, specifically configured hardware or processors, and/or a combination of the aforementioned. For example, the modules may be embodied as part of an exchange 100 for financial instruments. It should be appreciated the disclosed embodiments may be implemented as a different or separate module of the exchange computer system 100, or a separate computer system coupled with the exchange computer system 100 so as to have access to margin account record, pricing, and/or other data. As described herein, the disclosed embodiments may be implemented as a centrally accessible system or as a distributed system, e.g., where some of the disclosed functions are performed by the computer systems of the market participants.

The trading network environment shown in Fig. 1 includes exemplary computer devices 150, 152, 154, 156 and 158 which depict different exemplary methods or media by which a computer device may be coupled with the exchange computer system 100 or by which a user may communicate, e.g., send and receive, trade, clearing or other information therewith, such as by using messaging via the messaging module 122. It should be appreciated that the types of computer devices deployed by traders and the methods and media by which they communicate with the exchange computer system 100 is implementation dependent and may vary and that not all of the depicted computer devices and/or means/media of communication may be used and that other computer devices and/or means/media of communications, now available or later developed may be used. Each computer device, which may comprise a computer 200 described in more detail with respect to Fig. 2, may include a central processor, specifically configured or otherwise, that controls the overall operation of the computer and a system bus that connects the central processor to one or more conventional components, such as a network card or modem. Each computer device may also include a variety of interface units and drives for reading and writing data or files and communicating with other computer devices and with the exchange computer system 100. Depending on the type of computer device, a user can interact with the computer with a keyboard, pointing device, microphone, pen device or other input device now available or later developed.

An exemplary computer device 150 is shown directly connected to exchange computer system 100, such as via a T1 line, a common local area network (LAN) or other wired and/or wireless medium for connecting computer devices, such as the network 220 shown in Fig. 2 and described with respect thereto. The exemplary computer device 150 is further shown connected to a radio 168. The user of radio 168, which may include a cellular telephone, smart phone, or other wireless proprietary and/or non-proprietary device, may be a trader or exchange employee. The radio user may transmit orders or other information to the exemplary computer device 150 or a user thereof. The user of the exemplary computer device 150, or the exemplary computer device 150 alone and/or autonomously, may then transmit the trade or other information to the exchange computer system 100.

Exemplary computer devices 152 and 154 are coupled with a local area network ("LAN") 160 which may be configured in one or more of the well-known LAN topologies, e.g., star, daisy chain, etc., and may use a variety of different protocols, such as Ethernet, TCP/IP, etc. The exemplary computer devices 152 and 154 may communicate with each other and with other computers and other devices which are coupled with the LAN 160. Computers and other devices may be coupled with the LAN 160 via twisted pair wires, coaxial cable, fiber optics or other wired or wireless media. As shown in Fig. 1, an exemplary wireless personal digital assistant device ("PDA") 158, such as a mobile telephone, tablet based compute device, or other wireless device, may communicate with the LAN 160 and/or the Internet 162 via radio waves, such as via WiFi, Bluetooth and/or a cellular telephone based data communications protocol. PDA 158 may also communicate with exchange computer system 100 via a conventional wireless hub 164.

Fig. 1 also shows the LAN 160 coupled with a wide area network ("WAN") 162 which may be comprised of one or more public or private wired or wireless networks. In one embodiment, the WAN 162 includes the Internet 162. The LAN 160 may include a router to connect LAN 160 to the Internet 162. Exemplary computer device 156 is shown coupled directly to the Internet 162, such as via a modem, DSL line, satellite dish or any other device for connecting a computer device to the Internet 162 via a service provider therefore as is known. LAN 160 and/or WAN 162 may be the same as the network 220 shown in Fig. 2 and described with respect thereto.

Users of the exchange computer system 100 may include one or more market makers 166 which may maintain a market by providing constant bid and offer prices for a derivative or security to the exchange computer system 100, such as via one of the exemplary computer devices depicted. The exchange computer system 100 may also exchange information with other match or trade engines, such as trade engine 170. One skilled in the art will appreciate that numerous additional computers and systems may be coupled to exchange computer system 100. Such computers and systems may include clearing, regulatory and fee systems.

The operations of computer devices and systems shown in Fig. 1 may be controlled by computer-executable instructions stored on a non-transitory computer-readable medium. For example, the exemplary computer device 152 may store computer-executable instructions for receiving order information from a user, transmitting that order information to exchange computer system 100 in electronic messages, extracting the order information from the electronic messages, executing actions relating to the messages, and/or calculating values from characteristics of the extracted order to facilitate matching orders and executing trades. In another example, the exemplary computer device 154 may include computer-executable instructions for receiving market data from exchange computer system 100 and displaying that information to a user.

Numerous additional servers, computers, handheld devices, personal digital assistants, telephones, and other devices may also be connected to exchange computer system 100. Moreover, one skilled in the art will appreciate that the topology shown in Fig. 1 is merely an example and that the components shown in Fig. 1 may include other components not shown and be connected by numerous alternative topologies.

Referring now to Fig. 2, an illustrative embodiment of a general computer system 200 is shown. The computer system 200 can include a set of instructions that can be executed to cause the computer system 200 to perform any one or more of the methods or computer based functions disclosed herein. The computer system 200 may operate as a standalone device or may be connected, e.g., using a network, to other computer systems or peripheral devices. Any of the components discussed herein, such as processor 202, may be a computer system 200 or a component in the computer system 200. The computer system 200 may be specifically configured to implement a match engine, margin processing, payment or clearing function on behalf of an exchange, such as the Chicago Mercantile Exchange, of which the disclosed embodiments are a component thereof.

In a networked deployment, the computer system 200 may operate in the capacity of a server or as a client user computer in a client-server user network environment, or as a peer computer system in a peer-to-peer (or distributed) network environment. The computer system 200 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system 200 can be implemented using electronic devices that provide voice, video, or data communication. Further, while a single computer system 200 is illustrated, the term "system" shall also be taken to include any collection of systems or subsystems that individually or jointly execute a set, or multiple sets, of instructions to perform one or more computer functions.

As illustrated in Fig. 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be one or more general processors, digital signal processors, specifically configured processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that can communicate via a bus 208. The memory 204 may be a main memory, a static memory, or a dynamic memory. The memory 204 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one embodiment, the memory 204 includes a cache or random access memory for the processor 202. In alternative embodiments, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions 212 stored in the memory 204. The functions, acts or tasks are independent of the particular type of instructions set, storage media, processor or processing strategy and may be performed by software, hardware, integrated circuits, firmware, micro-code, and the like, operating alone or in combination. Likewise, processing strategies may include multiprocessing, multitasking, parallel processing, and the like.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in the drive unit 206.

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control, or any other device operative to interact with the system 200.

In a particular embodiment, as depicted in Fig. 2, the computer system 200 may also include a disk or optical drive unit 206. The disk drive unit 206 may include a computer-readable medium 210 in which one or more sets of instructions 212, e.g., software, can be embedded. Further, the instructions 212 may embody one or more of the methods or logic as described herein. In a particular embodiment, the instructions 212 may reside completely, or at least partially, within the memory 204 and/or within the processor 202 during execution by the computer system 200. The memory 204 and the processor 202 also may include computer-readable media as discussed herein.

The present disclosure contemplates a computer-readable medium that includes instructions 212 or receives and executes instructions 212 responsive to a propagated signal, so that a device connected to a network 220 can communicate voice, video, audio, images, or any other data over the network 220. Further, the instructions 212 may be transmitted or received over the network 220 via a communication interface 218. The communication interface 218 may be a part of the processor 202 or may be a separate component. The communication interface 218 may be created in software or may be a physical connection in hardware. The communication interface 218 is configured to connect with a network 220, external media, the display 214, or any other components in system 200, or combinations thereof. The connection with the network 220 may be a physical connection, such as a wired Ethernet connection or may be established wirelessly. Likewise, the additional connections with other components of the system 200 may be physical connections or may be established wirelessly.

The network 220 may include wired networks, wireless networks, or combinations thereof. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to, TCP/IP based networking protocols.

Embodiments of the subject matter and the functional operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding, or carrying a set of instructions for execution by a processor or that cause a computer system to perform any one or more of the methods or operations disclosed herein. The computer readable medium can be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In a particular non-limiting, exemplary embodiment, the computer-readable medium can include a solid-state memory such as a memory card or other package that houses one or more non-volatile read-only memories. Further, the computer-readable medium can be a random-access memory or other volatile re-writable memory. Additionally, the computer-readable medium can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated or otherwise specifically configured hardware implementations, such as application specific integrated circuits, programmable logic arrays and other hardware devices, can be constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an exemplary, non-limited embodiment, implementations can include shared or proprietary distributed processing, e.g., a cloud/shared host-based implementation, component/object distributed processing, and parallel processing. Alternatively, virtual computer system processing, e.g., using proprietary and/or cloud/shared host-based implementations, can be constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media, and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

As used herein, the terms "microprocessor" or "general-purpose processor" ("GPP") may refer to a hardware device that fetches instructions and data from a memory or storage device and executes those instructions (for example, an Intel Xeon processor or an AMD Opteron processor) to then, for example, process the data in accordance therewith. The term "reconfigurable logic" may refer to any logic technology whose form and function can be significantly altered (i.e., reconfigured) in the field post-manufacture as opposed to a microprocessor, whose function can change post-manufacture, e.g. via computer executable software code, but whose form, e.g. the arrangement/layout and interconnection of logical structures, is fixed at manufacture. The term "software" may refer to data processing functionality that is deployed on a GPP. The term "firmware" may refer to data processing functionality that is deployed on reconfigurable logic. One example of a reconfigurable logic is a field programmable gate array ("FPGA") which is a reconfigurable integrated circuit. An FPGA may contain programmable logic components called "logic blocks," and a hierarchy of reconfigurable interconnects that allow the blocks to be "wired together," somewhat like many (changeable) logic gates that can be inter-wired in (many) different configurations. Logic blocks may be configured to perform complex combinatorial functions, or merely simple logic gates like AND, OR, NOT and XOR. An FPGA may further include memory elements, which may be simple flip-flops or more complete blocks of memory.

To provide for interaction with a user, embodiments of the subject matter described in this specification can be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well. Feedback provided to the user can be any form of sensory feedback, e.g., visual feedback, auditory feedback, or tactile feedback. Input from the user can be received in any form, including acoustic, speech, or tactile input.

Embodiments of the subject matter described in this specification can be implemented in a computing system that includes a back end component, e.g., a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship with each other.

### RESILIENCY (DISASTER RECOVERY) MODULE

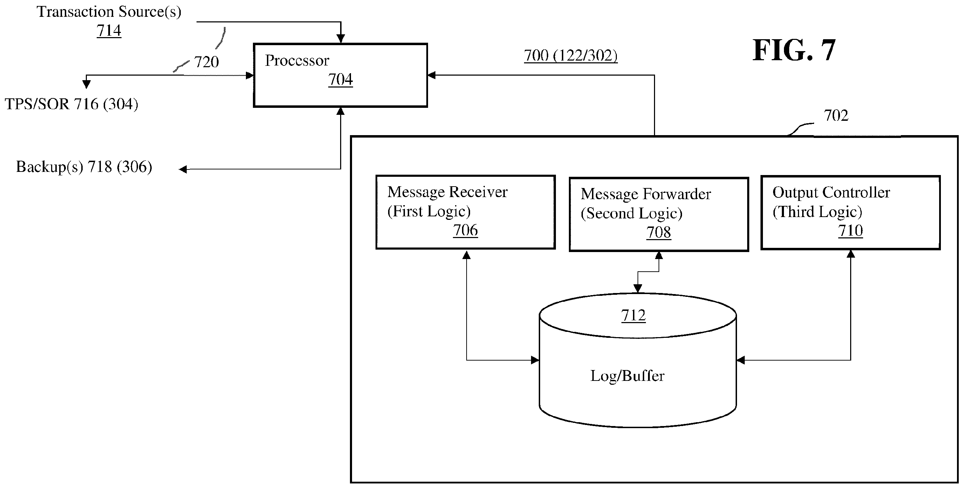

Fig. 7 depicts a more detailed block diagram of the disaster recovery (DR) module 122 of Fig. 1 illustrating a system 700 which may implement the synchronizer 302 described above and shown in Figure 3, also referred to as a component, intermediary, platform, transport or architecture, which may be implemented as a separate component or as one or more logic components, such as part of one more of the modules of the exchange computing system 100 described above, such as on an FPGA that may include a memory or reconfigurable component to store logic and processing component to execute the stored logic, or as computer program logic, stored in a memory 702, or other non-transitory computer readable medium, and executable by a processor 704, such as the processor 202 and memory 204 described above with respect to Figure 2.

The system 700 includes a message receiver 706, which may be implemented as first logic or other computer executable program code 706 stored in the memory 702 and configured to be executed by the processor 704, or otherwise operative to receive, from a message producer or other transaction source 714 coupled with the processor via an electronic communications network 720, such as the network 220 described above with respect to Figure 2, an electronic message or transaction communicated to a first transaction processing system, e.g., a primary instance 304 coupled with the processor 704 for processing thereby prior to receipt by the first transaction processing system, the transaction processing system configured to process each message upon receipt thereby and generate a result indicative thereof to be communicated to a recipient device, such as a database, application and/or end user. The message receiver 706 may further assign a sequence number or other designation of ordering to the received electronic message with respect other received electronic messages, i.e., defining the order in which the electronic message was received with respect to other received electronic messages. The message receiver 706 may modify the received electronic message to incorporate data indicative of the assigned sequence or otherwise associate the electronic message therewith, such as in a log or memory. It will be appreciated that, in an alternate embodiment, the electronic messages may already include data indicative of assigned sequence, or the sequencing may be assigned by a different component.

The system 700 further includes a message forwarder 708, which may be implemented as second logic or other computer executable program code 708 stored in the memory 702 and configured to be executed by the processor 704, or otherwise operative to contemporaneously forward, via an electronic communication network or other communications medium, a first copy of the electronic message to the first transaction processing system 716 (304) for processing thereby and a second copy of the electronic message to a remote processing system 718, e.g., a backup system(s)/intermediary 306, coupled with the processor 704 and configured to communicate an acknowledgment message corresponding to the electronic message back to the processor 704 at least confirming receipt of the second copy of the electronic message thereby.

The system 700 further includes a output controller 710, which may be implemented as third logic or other computer executable program code 710 stored in the memory 702 and configured to be executed by the processor 704, or otherwise operative to prevent the result generated based on the processing of the first copy of the electronic message from being published or otherwise communicated to the recipient device by the first transaction processing system 716 (304) until the acknowledgment message corresponding to the second copy of the electronic message has been received from the remote processing system 718 (306).

The system 700 may be implemented as one or more separate components or as one or more logic components, e.g. first through third logic 706-710, such as on an FPGA that may include a memory or reconfigurable component to store logic and processing component to execute the stored logic, or as computer program logic, stored in the memory 702, or other non-transitory computer readable medium, and executable by a processor 704, such as the processor 202 and memory 204 described below with respect to Figure 2, to cause the processor 704 to, or otherwise be operative to, implement the above described operations.

In one embodiment, the processor 704 comprises a first processing thread which forwards the message copies and stores data in the log, a second processing thread which watches for results, a third processing thread which watches for acks, and a fourth processing threads which determined when to release results.

In one embodiment, the processing of the electronic message by the first transaction processing system 716 (304) to generate the result takes an amount of time which may vary.

In one embodiment, the first transaction processing system 716 (304) is capable of processing more than one electronic message simultaneously.

In one embodiment, the first transaction processing system 716 (304) comprises a set of sequential processing stages, each of which may be processing a different electronic message at the same time.

In one embodiment, one or more of the sequential processing stages produces an intermediate processing result based on the processing of an electronic message.

In one embodiment, the remote processing system 718 (306) comprises one of a storage system configured to store the second copy of the electronic message or a second transaction processing system configured to process each electronic message, upon receipt or in batch as described elsewhere herein, and generate a result indicative thereof as a backup to the first transaction processing system.

In one embodiment, the second transaction processing system 718 (306) is located in a different geographic region from where the first transaction processing system 716 (304) is located.

In one embodiment, the remote processing system 718 (306) comprises an intermediary, such as a Spanner instance, and is further coupled with a plurality of other remote processing systems, the remote processing system configured to relay received electronic messages to the other remote processing systems and ensure that the other remote processing systems received the electronic messages related thereto.

In one embodiment, the acknowledgment message comprises data indicative of a commit operation performed by the remote processing system 718 (306).

In one embodiment, communication of the result generated based on the processing of the first copy of the electronic message is only prevented when the result generated based on the processing of the first copy of the electronic message has been generated prior to receipt of the acknowledgment message corresponding to the second copy of the electronic message.

In one embodiment, the computer executable instructions are further executable by the processor 704 to cause the processor 704 to store data indicative of the forwarding in a data structure maintained by the processor 704 in a memory 702 coupled therewith in association with data indicative of the electronic message and:
when the result based on the processing of the first copy of the electronic message has been generated prior to receipt of the acknowledgment message corresponding to the second copy of the electronic message, store data indicative of the result having been generated in the data structure; and
when the acknowledgment message corresponding to the second copy of the electronic message has been received prior to generation of the result based on the processing of the first copy of the electronic message, store data indicative of the acknowledgment having been received in the data structure; and
wherein, upon a determination by the processor 704, using the data structure, that data indicative of one of the results having been generated or the acknowledgment having been received is stored in the data structure, determine whether the other of the result having been generated or the acknowledgment having been received has occurred.

In one embodiment, the remote processing system 718 (306) is one of a plurality of remote processing systems to which the second copy of the electronic message is sent, wherein the preventing further comprises preventing, by the processor 704, the result generated based on the processing of the first copy of the electronic message from being communicated to the recipient by the first transaction processing system 716 (304) until the acknowledgment message corresponding to the second copy of the electronic message has been received from at least a subset of the plurality of remote processing systems. In one embodiment, all of them.

In one embodiment, the processor 704 comprises a buffer memory configured to store the result from the transaction processing system and communicate the result to the recipient when not prevented from doing so.

In one embodiment, the computer executable instructions are further executable by the processor 704 to cause the processor 704 to determine a sequence in which the electronic message was received relative to previously received electronic messages, and determining upon a failure of the transaction processing system, based on the determined sequence, the electronic message forwarded for processing in sequence just after to the last electronic message for which a result was communicated, such that recovery begins therefrom.

In one embodiment, the processor 704 is configured to assign a sequence, such as a time stamp or sequence number, to each electronic message upon receipt thereof, the sequence indicative of an ordering of the electronic message relative to previously received electronic messages.

In one embodiment, the processor 704 is configured to be able to recover all electronic messages which have been forwarded to the transaction processing system 716 (304) for which a result has not been communicated.

In one embodiment, the remote processing system 718 (306) is further configured to communicate the acknowledgment message corresponding to the electronic message only upon receipt of a request therefore from the processor 704, wherein when the request is received by the remote system subsequent to receipt thereby of a plurality of electronic messages received subsequent to a prior request, the acknowledgment message corresponds to the plurality of electronic messages confirming receipt thereof, wherein the processor 704 dynamically determines when, with respect to forwarding of one or more electronic messages, to send the request for the acknowledgment message such that acknowledgment messages corresponding to a particular electronic messages are received prior to or contemporaneously with the generation of the result of the processing thereof by the transaction processing system.

In one embodiment, the remote processing system 718 (306) is further configured to communicate a single acknowledgment message corresponding to the electronic message and at least one other electronic message contemporaneously communicated therewith or previously communicated prior thereto.

In one embodiment, the computer executable instructions are further executable by the processor 704 to cause the processor 704 to direct the remote processing system 718 (306) to communicate a single acknowledgment message corresponding to the electronic message and at least one other electronic message contemporaneously communicated therewith or previously communicated prior thereto.

In one embodiment, the computer executable instructions are further executable by the processor 704 to cause the processor 704 to determine when to direct the remote processing system 718 (306) to communicate the single acknowledgment message based on a time difference between when a prior direction was sent and when the acknowledgment message responsive thereto was received, and an amount of time it took the first transaction processing system 716 (304) to process a prior electronic message upon receipt thereby and generate a result indicative thereof to be communicated to the recipient device.

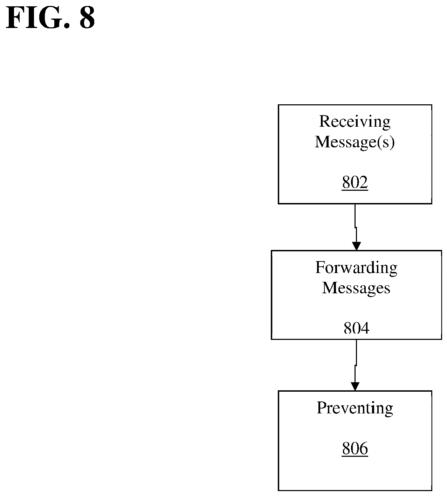

Fig. 8 illustrates an example flowchart 800 of the operation of the system 700 of Fig. 7. In one embodiment, the operation of the system 700 includes: receiving, by a processor, e.g., the processor 704, coupled with a message producer or other transaction source via an electronic communications network, an electronic message/transaction communicated to a first transaction processing system coupled with the processor for processing thereby prior to receipt by the first transaction processing system, the transaction processing system configured to process each message upon receipt thereby and generate a result indicative thereof to be communicated to a recipient device, such as database or other consumer (Block 802); contemporaneously forwarding, by the processor, a first copy of the electronic message to the first transaction processing system for processing thereby and a second copy of the electronic message to a remote processing system coupled with the processor and configured to communicate an acknowledgment message corresponding to the electronic message back to the processor at least confirming receipt of the second copy of the electronic message thereby (Block 804); and preventing, by the processor, the result generated based on the processing of the first copy of the electronic message from being published or otherwise communicated to the recipient device by the first transaction processing system until the acknowledgment message corresponding to the second copy of the electronic message has been received from the remote processing system (Block 806).

In one embodiment, the processor comprises a first processing thread which forwards the message copies and stores data in the log, a second processing thread which watches for results, a third processing thread which watches for acks, and a fourth processing threads which determined when to release results.

In one embodiment, the processing of the electronic message by the first transaction processing system to generate the result takes an amount of time which may vary.

In one embodiment, the first transaction processing system is capable of processing more than one electronic message simultaneously.

In one embodiment, the first transaction processing system comprises a set of sequential processing stages, each of which may be processing a different electronic message at the same time.

In one embodiment, one or more of the sequential processing stages produces an intermediate processing result based on the processing of an electronic message.

In one embodiment, the remote processing system comprises one of a storage system configured to store the second copy of the electronic message or a second transaction processing system configured to process each electronic message, upon receipt or in batch as described elsewhere herein, and generate a result indicative thereof as a backup to the first transaction processing system.

In one embodiment, the second transaction processing system is located in a different geographic region from where the first transaction processing system is located.

In one embodiment, the remote processing system comprises an intermediary device, such as Spanner instance, and is further coupled with a plurality of other remote processing systems, the remote processing system configured to relay received electronic messages to the other remote processing systems and ensure that the other remote processing systems received the electronic messages related thereto.

In one embodiment, the acknowledgment message comprises data indicative of a commit operation performed by the remote processing system.

In one embodiment, communication of the result generated based on the processing of the first copy of the electronic message is only prevented when the result generated based on the processing of the first copy of the electronic message has been generated prior to receipt of the acknowledgment message corresponding to the second copy of the electronic message.

In one embodiment, the operation of the system 700 further includes storing data indicative of the forwarding in a data structure maintained by the processor in a memory coupled therewith in association with data indicative of the electronic message and: when the result based on the processing of the first copy of the electronic message has been generated prior to receipt of the acknowledgment message corresponding to the second copy of the electronic message, storing data indicative of the result having been generated in the data structure; and when the acknowledgment message corresponding to the second copy of the electronic message has been received prior to generation of the result based on the processing of the first copy of the electronic message, storing data indicative of the acknowledgment having been received in the data structure; and wherein the preventing further comprises, upon determining by the processor, using the data structure, that data indicative of one of the result having been generated or the acknowledgment having been received is stored in the data structure, determining, by the processor, whether the other of the result having been generated or the acknowledgment having been received has occurred.

In one embodiment, the remote processing system is one of a plurality of remote processing systems to which the second copy of the electronic message is sent, wherein the preventing further comprises preventing, by the processor, the result generated based on the processing of the first copy of the electronic message from being communicated to the recipient by the first transaction processing system until the acknowledgment message corresponding to the second copy of the electronic message has been received from at least a subset of the plurality of remote processing systems. In one embodiment, all of them.

In one embodiment, the processor comprises a buffer memory configured to store the result from the transaction processing system and communicate the result to the recipient when not prevented from doing so.

In one embodiment, the operation of the system 700 further includes determining, by the processor a sequence in which the electronic message was received relative to previously received electronic messages, and determining upon a failure of the transaction processing system, based on the determined sequence, the electronic message forwarded for processing in sequence just after to the last electronic message for which a result was communicated, such that recovery begins therefrom.

In one embodiment, the processor is configured to assign a sequence, e.g., a time stamp or sequence number, to each electronic message upon receipt thereof, the sequence indicative of an ordering of the electronic message relative to previously received electronic messages.

In one embodiment, the processor is configured to be able to recover all electronic messages which have been forwarded to the transaction processing system for which a result has not been communicated.

In one embodiment, the remote system is further configured to communicate the acknowledgment message corresponding to the electronic message only upon receipt of a request therefore from the processor, wherein when the request is received by the remote system subsequent to receipt thereby of a plurality of electronic messages received subsequent to a prior request, the acknowledgment message corresponds to the plurality of electronic messages confirming receipt thereof, wherein the processor dynamically determines when, with respect to forwarding of one or more electronic messages, to send the request for the acknowledgment message such that acknowledgment messages corresponding to a particular electronic messages are received prior to or contemporaneously with the generation of the result of the processing thereof by the transaction processing system.

In one embodiment, the remote processing system is further configured to communicate a single acknowledgment message corresponding to the electronic message and at least one other electronic message contemporaneously communicated therewith or previously communicated prior thereto.

In one embodiment, the operation of the system 700 further includes directing, by the processor, the remote processing system to communicate a single acknowledgment message corresponding to the electronic message and at least one other electronic message contemporaneously communicated therewith or previously communicated prior thereto.

In one embodiment, the operation of the system 700 further includes determining, by the processor, when to direct the remote processing system to communicate the single acknowledgment message based on a time difference between when a prior direction was sent and when the acknowledgment message responsive thereto was received, and an amount of time it took the first transaction processing system to process a prior electronic message upon receipt thereby and generate a result indicative thereof to be communicated to the recipient device.

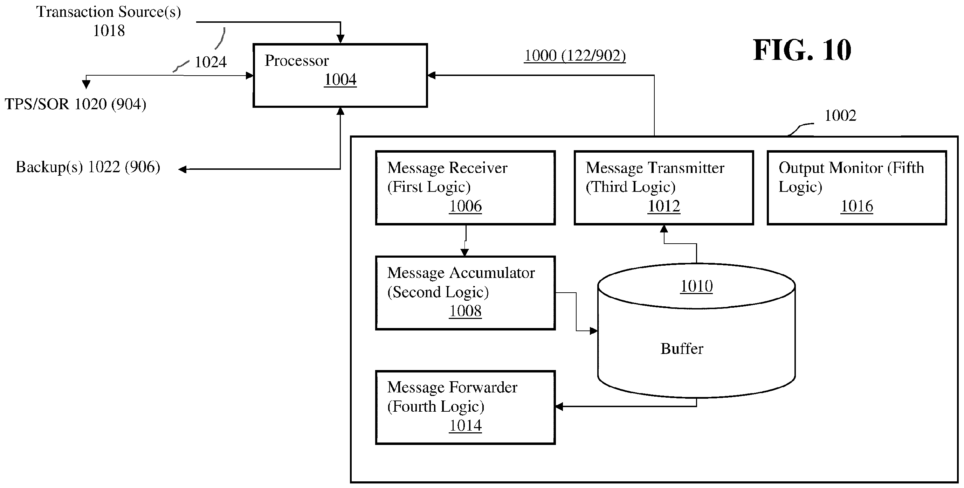

Fig. 10 depicts a more detailed block diagram of the disaster recovery (DR) module 122 of Fig. 1 illustrating a system 1000 which may implement the synchronizer 902 described above and shown in Figure 9A, also referred to as a component, intermediary, platform, transport or architecture, which may be implemented as a separate component or as one or more logic components, such as part of one more of the modules of the exchange computing system 100 described above, such as on an FPGA that may include a memory or reconfigurable component to store logic and processing component to execute the stored logic, or as computer program logic, stored in a memory 1002, or other non-transitory computer readable medium, and executable by a processor 1004, such as the processor 202 and memory 204 described above with respect to Figure 2.

The system 1000 includes a message receiver 1006, which may be implemented as first logic or other computer executable program code 1006 stored in the memory 1002 and configured to be executed by the processor 1004, or otherwise operative to receive, from a message producer or other transaction source 1018 coupled with the processor via an electronic communications network 1024, such as the network 220 described above with respect to Figure 2, an electronic message or transaction communicated to a first transaction processing system, e.g., a primary instance 904 coupled with the processor 1004 for processing thereby prior to receipt by the first transaction processing system, the transaction processing system configured to process each message upon receipt thereby and generate a result indicative thereof to be communicated to a recipient device, such as a database, application and/or end user. The message receiver 1006 may further assign a sequence number or other designation of ordering to the received electronic message with respect other received electronic messages, i.e., defining the order in which the electronic message was received with respect to other received electronic messages. The message receiver 1006 may modify the received electronic message to incorporate data indicative of the assigned sequence or otherwise associate the electronic message therewith, such as in a log or memory. It will be appreciated that, in an alternate embodiment, the electronic messages may already include data indicative of assigned sequence, or the sequencing may be assigned by a different component.

The system 100 includes a message accumulator 1008, which may be implemented as second logic or other computer executable program code 1008 stored in the memory 1002 and configured to be executed by the processor 1004, or otherwise operative to store the received sequenced electronic message in a buffer memory 1010, or a defined portion/area thereof. As was noted elsewhere, as sequenced electronic messages are received by the system 1000, they are accumulated in the buffer memory 1010. The message accumulator 1008 further implements a counter and/or timer which determine, as described elsewhere herein, when either a threshold number of electronic messages have been accumulated in the buffer memory 1010 or a defined amount of time has elapsed. Upon the determination that a threshold number of electronic messages have been accumulated in the buffer memory 1010 or a defined amount of time has elapsed, the message accumulator 1008 may begin storing subsequently received sequenced electronic messages in a new buffer memory 1010, or new portion thereof, and begin again monitoring for whether the threshold number of electronic messages have been accumulated in the new buffer memory 1010 or the defined amount of time has elapsed. As described above, the threshold number of electronic messages and/or the defined period of time may be statically or dynamically defined.

The system 1000 further includes a message transmitter 1012, which may be implemented as third logic or other computer executable program code 1012 stored in the memory 1002 and configured to be executed by the processor 1004, or otherwise operative, upon the determination that a threshold number of electronic messages have been accumulated in the buffer memory 1010 or a defined amount of time has elapsed, to transmit, via an electronic communication network or other communications medium, a copy of the accumulated electronic messages to a remote processing system, e.g., a backup system(s)/intermediary 906, coupled with the processor 1004 and configured to communicate an acknowledgment message corresponding to the electronic message(s) back to the processor 1004 at least confirming receipt thereby. In one embodiment, the message transmitter 1012 sends all of the accumulated electronic messages in one batch/transmission along with a request for the remote processing system, e.g., the backup system(s)/intermediary 906, to process, store or otherwise acknowledge receipt, of all of the transmitted electronic messages, e.g., transmit an acknowledgment message back to the system 1000 indicating that they have all been committed. Alternatively, the message transmitter 1012 may transmit a copy of each electronic message as they are stored in the buffer memory 1010 and, only upon the determination that a threshold number of electronic messages have been accumulated in the buffer memory 1010 or a defined amount of time has elapsed, transmit a request for the remote processing system, e.g., the backup system(s)/intermediary 906, to process, store or otherwise acknowledge receipt, of all of the transmitted electronic messages, e.g., transmit an acknowledgment message back to the system 1000 indicating that they have been committed.

The system 1000 further includes a message forwarder 1014, which may be implemented as fourth logic or other computer executable program code 1014 stored in the memory 1002 and configured to be executed by the processor 1004, or otherwise operative, upon receipt of an acknowledgment message from the remote processing system, e.g., the backup system(s)/intermediary 906, acknowledging that the previously transmitted electronic messages have received, processed, and/or stored, forward, via an electronic communication network or other communications medium, each of the stored sequenced electronic messages to the first transaction processing system 1020 (904) for processing thereby in the sequenced order. As each transaction message is forwarded, it may be removed from the buffer memory 1010.

The system 1000 further includes a output monitor 1016, which may be implemented as fifth logic or other computer executable program code 1016 stored in the memory 1002 and configured to be executed by the processor 1004, or otherwise operative to monitor the results generated by the primary instance 1020 (904) based on the processing of the electronic messages and determine the electronic message, or sequence number thereof, associated with at least the most recently generated output indicative of that electronic message being the most recently successfully processed electronic message. Periodically, i.e., either after a defined number of results have been generated and/or after a defined period of time has elapsed, the output monitor 1016 communicates an electronic message to the remote processing system 1022, e.g., the backup system(s)/intermediary 906, including data indicative of the then current most recently successfully processed electronic message, e.g., the sequence number thereof. In one implementation, the output monitor 1016 may communicate this information as each result is generated. The output monitor 1016 may communicate these messages to the message transmitter 1012 for inclusion with the transmission of the current accumulation of received sequenced electronic messages. Alternatively, the output monitor 1016 may communicate directly with the remote processing system 1022, e.g., the backup system(s)/intermediary 906. As described elsewhere herein, the remote processing system 1022, e.g., the backup system(s)/intermediary 906, uses the indication of the then current most recently successfully processed electronic message to know with which electronic message to commence processing of electronic messages when recovering from a failure, i.e., it will commence with the next electronic message in sequence following the indicated then current most recently successfully processed electronic message.

The system 1000 may be implemented as one or more separate components or as one or more logic components, e.g. first through fifth logic 1006-1016, such as on an FPGA that may include a memory or reconfigurable component to store logic and processing component to execute the stored logic, or as computer program logic, stored in the memory 1002, or other non-transitory computer readable medium, and executable by a processor 1004, such as the processor 202 and memory 204 described below with respect to Figure 2, to cause the processor 1004 to, or otherwise be operative to, implement the above described operations.

In one embodiment, the processor 1004 comprises a first processing thread which receives and/or sequences the received electronic messages, a second processing thread which stores the sequenced electronic messages in the buffer memory 1010 and determines when a threshold number of electronic messages have been stored or a predetermined time period/limit has elapsed, a third processing thread which transmits a copy of the accumulated electronic messages to the remote processing system 1022 (906), a fourth processing thread which watches for the acknowledgement messages and forwards the stored electronic messages to the primary processing system 1020 (904), and a fifth processing thread which monitors the outputs of the first transaction processing system 1020 (904) and communicates, e.g., periodically, an indication of the most recently successfully processed electronic message to the remote processing system 1022 (906).

In one embodiment, the processing of the electronic message by the first transaction processing system 1020 (904) to generate the result takes an amount of time which may vary.

In one embodiment, the first transaction processing system 1020 (904) is capable of processing more than one electronic message simultaneously.

In one embodiment, the first transaction processing system 1020 (904) comprises a set of sequential processing stages, each of which may be processing a different electronic message at the same time.

In one embodiment, one or more of the sequential processing stages produces an intermediate processing result based on the processing of an electronic message.

In one embodiment, the remote processing system 1022 (906) comprises one of a storage system configured to store the second copy of the electronic message or a second transaction processing system configured to process each electronic message, upon receipt or in batch as described elsewhere herein, and generate a result indicative thereof as a backup to the first transaction processing system.

In one embodiment, the second transaction processing system is located in a different geographic region from where the first transaction processing system is located.

In one embodiment, the remote processing system 1022 (906) comprises an intermediary, such as a Spanner instance, and is further coupled with a plurality of other remote processing systems, the remote processing system 1022 (906) configured to relay received electronic messages to the other remote processing systems and ensure that the other remote processing systems received the electronic messages related thereto.

In one embodiment, the acknowledgment message comprises data indicative of a commit operation performed by the remote processing system 1022 (906).

In one embodiment, the remote processing system 1022 (906) is one of a plurality of remote processing systems to which the copies of the accumulated electronic messages are sent, wherein the accumulated sequenced electronic messages are not forwarded to the first transaction processing system 1020 (904) until the acknowledgment message corresponding to the copies of the accumulated electronic messages has been received from at least a subset of the plurality of remote processing systems. In one embodiment, all of them.

In one embodiment, the processor 1004 is configured to assign a sequence, such as a time stamp or sequence number, to each electronic message upon receipt thereof, the sequence indicative of an ordering of the electronic message relative to previously received electronic messages.

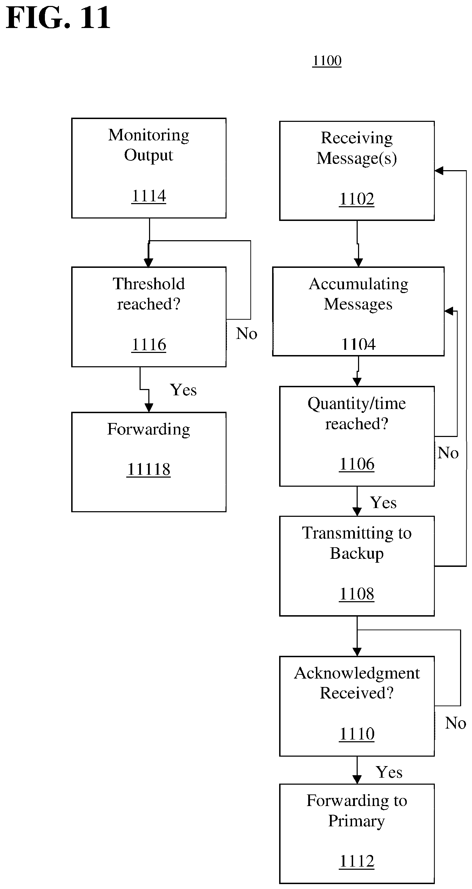

Fig. 11 illustrates an example flowchart 1100 of the operation of the system 1000 of Fig. 10. In one embodiment, the operation of the system 1000 includes: receiving, by a processor coupled with a message producer or other transaction source via an electronic communications network, an electronic message/transaction communicated to a first transaction processing system coupled with the processor for processing thereby prior to receipt by the first transaction processing system, the transaction processing system configured to process each message upon receipt thereby and generate a result indicative thereof to be communicated to a recipient device, such as database or other consumer (Block 1102); accumulating the received electronic messages in a buffer memory until a threshold number of electronic messages have been accumulated or a defined period of time has elapsed (Block 1104); Upon determination that the threshold number of electronic messages have been accumulated or the defined period of time has elapsed (Block 11006), transmitting a copy of the accumulated electronic messages to the remote processing system (Block 1108) and awaiting an acknowledgment message therefrom (Block 1110); and upon receipt of the acknowledgment message, forwarding the accumulated electronic messages to the first transaction processing system for processing thereby (Block 1112). The operation further includes monitoring the outputs of the first transaction processing system (Block 1114) and periodically, e.g., after a threshold number of outputs have been generated or after the elapse of a defined period time (Block 1116), communicate an indication of the most recently successfully processed electronic message to the remote system (Block 1118).

In one embodiment, the operations of the processor are implemented as one or more processing threads.

In one embodiment, the processing of the electronic message by the first transaction processing system to generate the result takes an amount of time which may vary.

In one embodiment, the first transaction processing system is capable of processing more than one electronic message simultaneously.

In one embodiment, the first transaction processing system comprises a set of sequential processing stages, each of which may be processing a different electronic message at the same time.

In one embodiment, one or more of the sequential processing stages produces an intermediate processing result based on the processing of an electronic message.

In one embodiment, the remote processing system comprises one of a storage system configured to store the second copy of the electronic message or a second transaction processing system configured to process each electronic message, upon receipt or in batch as described elsewhere herein, and generate a result indicative thereof as a backup to the first transaction processing system.

In one embodiment, the second transaction processing system is located in a different geographic region from where the first transaction processing system is located.

In one embodiment, the remote processing system comprises an intermediary device, such as Spanner instance, and is further coupled with a plurality of other remote processing systems, the remote processing system configured to relay received electronic messages to the other remote processing systems and ensure that the other remote processing systems received the electronic messages related thereto.

In one embodiment, the acknowledgment message comprises data indicative of a commit operation performed by the remote processing system.

In one embodiment, the remote processing system is one of a plurality of remote processing systems to which the copy of the accumulated electronic messages are sent, wherein forwarding of the accumulated electronic messages does not occur until the acknowledgment message corresponding to the copy of the electronic messages has been received from at least a subset of the plurality of remote processing systems. In one embodiment, all of them.

In one embodiment, the operation of the system 700 further includes determining, by the processor a sequence in which the electronic message was received relative to previously received electronic messages, and determining upon a failure of the transaction processing system, based on the determined sequence, the electronic message forwarded for processing in sequence just after to the last electronic message for which a result was communicated, such that recovery begins therefrom.

In one embodiment, the processor is configured to assign a sequence, e.g., a time stamp or sequence number, to each electronic message upon receipt thereof, the sequence indicative of an ordering of the electronic message relative to previously received electronic messages.

### CONCLUSION

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the described embodiments should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims, including all equivalents, that are intended to define the scope of this invention.

Further embodiments of the invention are highlighted by the following numbered clauses:
Clause 1. A computer implemented method comprising: receiving, by a processor coupled with a message producer via an electronic communications network, an electronic message communicated to a first transaction processing system coupled with the processor for processing thereby prior to receipt by the first transaction processing system, the transaction processing system configured to process each message upon receipt thereby and generate a result indicative thereof to be communicated to a recipient device; contemporaneously forwarding, by the processor, a first copy of the electronic message to the first transaction processing system for processing thereby and a second copy of the electronic message to a remote processing system coupled with the processor and configured to communicate an acknowledgment message corresponding to the electronic message back to the processor at least confirming receipt of the second copy of the electronic message thereby; and preventing, by the processor, the result generated based on the processing of the first copy of the electronic message from being communicated to the recipient device by the first transaction processing system until the acknowledgment message corresponding to the second copy of the electronic message has been received from the remote processing system.
Clause 2. The computer implemented method of clause 1, wherein the processor comprises a first processing thread which forwards the message copies and stores data in the log, a second processing thread which watches for results, a third processing thread which watches for acks, and a fourth processing threads which determined when to release results.
Clause 3. The computer implemented method of clause 1, wherein the processing of the electronic message by the first transaction processing system to generate the result takes an amount of time which may vary.
Clause 4. The computer implemented method of clause 1, wherein the first transaction processing system is capable of processing more than one electronic message simultaneously.
Clause 5. The computer implemented method of clause 1, wherein the first transaction processing system comprises a set of sequential processing stages, each of which may be processing a different electronic message at the same time.
Clause 6. The computer implemented method of clause 1, wherein one or more of the sequential processing stages produces an intermediate processing result based on the processing of an electronic message.
Clause 7. The computer implemented method of clause 1, wherein the remote processing system comprises one of a storage system configured to store the second copy of the electronic message or a second transaction processing system configured to process each electronic message and generate a result indicative thereof as a backup to the first transaction processing system.
Clause 8. The computer implemented method of clause 7, wherein the second transaction processing system is located in a different geographic region from where the first transaction processing system is located.
Clause 9. The computer implemented method of clause 1, wherein the remote processing system is further coupled with a plurality of other remote processing systems, the remote processing system configured to relay received electronic messages to the other remote processing systems and ensure that the other remote processing systems received the electronic messages related thereto.
Clause 10. The computer implemented method of clause 1, wherein the acknowledgment message comprises data indicative of a commit operation performed by the remote processing system.
Clause 11. The computer implemented method of clause 1, wherein communication of the result generated based on the processing of the first copy of the electronic message is only prevented when the result generated based on the processing of the first copy of the electronic message has been generated prior to receipt of the acknowledgment message corresponding to the second copy of the electronic message.
Clause 12. The computer implemented method of clause 1, further comprising storing data indicative of the forwarding in a data structure maintained by the processor in a memory coupled therewith in association with data indicative of the electronic message and: when the result based on the processing of the first copy of the electronic message has been generated prior to receipt of the acknowledgment message corresponding to the second copy of the electronic message, storing data indicative of the result having been generated in the data structure; and when the acknowledgment message corresponding to the second copy of the electronic message has been received prior to generation of the result based on the processing of the first copy of the electronic message, storing data indicative of the acknowledgment having been received in the data structure; and wherein the preventing further comprises, upon determining by the processor, using the data structure, that data indicative of one of the result having been generated or the acknowledgment having been received is stored in the data structure, determining, by the processor, whether the other of the result having been generated or the acknowledgment having been received has occurred.
Clause 13. The computer implemented method of clause 1, wherein the remote processing system is one of a plurality of remote processing systems to which the second copy of the electronic message is sent, wherein the preventing further comprises preventing, by the processor, the result generated based on the processing of the first copy of the electronic message from being communicated to the recipient by the first transaction processing system until the acknowledgment message corresponding to the second copy of the electronic message has been received from at least a subset of the plurality of remote processing systems.
Clause 14. The computer implemented method of clause 1, wherein the processor comprises a buffer memory configured to store the result from the transaction processing system and communicate the result to the recipient when not prevented from doing so.
Clause 15. The computer implemented method of clause 1, further comprising, determining, by the processor a sequence in which the electronic message was received relative to previously received electronic messages, and determining upon a failure of the transaction processing system, based on the determined sequence, the electronic message forwarded for processing in sequence just after to the last electronic message for which a result was communicated, such that recovery begins therefrom.
Clause 16. The computer implemented method of clause 15, wherein the processor is configured to assign a sequence to each electronic message upon receipt thereof, the sequence indicative of an ordering of the electronic message relative to previously received electronic messages.
Clause 17. The computer implemented method of clause 1, wherein the processor is configured to be able to recover all electronic messages which have been forwarded to the transaction processing system for which a result has not been communicated.
Clause 18. The computer implemented method of clause 1, wherein the remote system is further configured to communicate the acknowledgment message corresponding to the electronic message only upon receipt of a request therefore from the processor, wherein when the request is received by the remote system subsequent to receipt thereby of a plurality of electronic messages received subsequent to a prior request, the acknowledgment message corresponds to the plurality of electronic messages confirming receipt thereof, wherein the processor dynamically determines when, with respect to forwarding of one or more electronic messages, to send the request for the acknowledgment message such that acknowledgment messages corresponding to a particular electronic messages are received prior to or contemporaneously with the generation of the result of the processing thereof by the transaction processing system.
Clause 19. The computer implemented method of clause 1, wherein the remote processing system is further configured to communicate a single acknowledgment message corresponding to the electronic message and at least one other electronic message contemporaneously communicated therewith or previously communicated prior thereto.
Clause 20. The computer implemented method of clause 1, further comprising directing, by the processor, the remote processing system to communicate a single acknowledgment message corresponding to the electronic message and at least one other electronic message contemporaneously communicated therewith or previously communicated prior thereto.
Clause 21. The computer implemented method of clause 20, further comprising determining, by the processor, when to direct the remote processing system to communicate the single acknowledgment message based on a time difference between when a prior direction was sent and when the acknowledgment message responsive thereto was received, and an amount of time it took the first transaction processing system to process a prior electronic message upon receipt thereby and generate a result indicative thereof to be communicated to the recipient device.
Clause 22. A system comprising: a processor and a non-volatile memory coupled therewith, the memory comprising computer executable instructions that, when executed by the processor, cause the processor to: receive, from a message producer coupled with the processor via an electronic communications network, an electronic message communicated to a first transaction processing system coupled with the processor for processing thereby prior to receipt by the first transaction processing system, the transaction processing system configured to process each message upon receipt thereby and generate a result indicative thereof to be communicated to a recipient device; contemporaneously forward a first copy of the electronic message to the first transaction processing system for processing thereby and a second copy of the electronic message to a remote processing system coupled with the processor and configured to communicate an acknowledgment message corresponding to the electronic message back to the processor at least confirming receipt of the second copy of the electronic message thereby; and prevent the result generated based on the processing of the first copy of the electronic message from being communicated to the recipient device by the first transaction processing system until the acknowledgment message corresponding to the second copy of the electronic message has been received from the remote processing system.
Clause 23. The system of clause 22, wherein the processor comprises a first processing thread which forwards the message copies and stores data in the log, a second processing thread which watches for results, a third processing thread which watches for acks, and a fourth processing threads which determined when to release results.
Clause 24. The system of clause 22, wherein the processing of the electronic message by the first transaction processing system to generate the result takes an amount of time which may vary.
Clause 25. The system of clause 22, wherein the first transaction processing system is capable of processing more than one electronic message simultaneously.
Clause 26. The system of clause 22, wherein the first transaction processing system comprises a set of sequential processing stages, each of which may be processing a different electronic message at the same time.
Clause 27. The system of clause 22, wherein one or more of the sequential processing stages produces an intermediate processing result based on the processing of an electronic message.
Clause 28. The system of clause 22, wherein the remote processing system comprises one of a storage system configured to store the second copy of the electronic message or a second transaction processing system configured to process each electronic message and generate a result indicative thereof as a backup to the first transaction processing system.
Clause 29. The system of clause 28, wherein the second transaction processing system is located in a different geographic region from where the first transaction processing system is located.
Clause 30. The system of clause 22, wherein the remote processing system is further coupled with a plurality of other remote processing systems, the remote processing system configured to relay received electronic messages to the other remote processing systems and ensure that the other remote processing systems received the electronic messages related thereto.
Clause 31.The system of clause 22, wherein the acknowledgment message comprises data indicative of a commit operation performed by the remote processing system.
Clause 32. The system of clause 22, wherein communication of the result generated based on the processing of the first copy of the electronic message is only prevented when the result generated based on the processing of the first copy of the electronic message has been generated prior to receipt of the acknowledgment message corresponding to the second copy of the electronic message.
Clause 33.The system of clause 22, wherein the computer executable instructions are further executable by the processor to cause the processor to store data indicative of the forwarding in a data structure maintained by the processor in a memory coupled therewith in association with data indicative of the electronic message and: when the result based on the processing of the first copy of the electronic message has been generated prior to receipt of the acknowledgment message corresponding to the second copy of the electronic message, store data indicative of the result having been generated in the data structure; and when the acknowledgment message corresponding to the second copy of the electronic message has been received prior to generation of the result based on the processing of the first copy of the electronic message, store data indicative of the acknowledgment having been received in the data structure; and wherein, upon a determination by the processor, using the data structure, that data indicative of one of the result having been generated or the acknowledgment having been received is stored in the data structure, determine whether the other of the result having been generated or the acknowledgment having been received has occurred.
Clause 34. The system of clause 22, wherein the remote processing system is one of a plurality of remote processing systems to which the second copy of the electronic message is sent, wherein the preventing further comprises preventing, by the processor, the result generated based on the processing of the first copy of the electronic message from being communicated to the recipient by the first transaction processing system until the acknowledgment message corresponding to the second copy of the electronic message has been received from at least a subset of the plurality of remote processing systems.
Clause 35.The system of clause 22, wherein the processor comprises a buffer memory configured to store the result from the transaction processing system and communicate the result to the recipient when not prevented from doing so.
Clause 36. The system of clause 22, wherein the computer executable instructions are further executable by the processor to cause the processor to determine a sequence in which the electronic message was received relative to previously received electronic messages, and determining upon a failure of the transaction processing system, based on the determined sequence, the electronic message forwarded for processing in sequence just after to the last electronic message for which a result was communicated, such that recovery begins therefrom.
Clause 37. The system of clause 36, wherein the processor is configured to assign a sequence to each electronic message upon receipt thereof, the sequence indicative of an ordering of the electronic message relative to previously received electronic messages.
Clause 38. The system of clause 22, wherein the processor is configured to be able to recover all electronic messages which have been forwarded to the transaction processing system for which a result has not been communicated.
Clause 39. The system of clause 22, wherein the remote system is further configured to communicate the acknowledgment message corresponding to the electronic message only upon receipt of a request therefore from the processor, wherein when the request is received by the remote system subsequent to receipt thereby of a plurality of electronic messages received subsequent to a prior request, the acknowledgment message corresponds to the plurality of electronic messages confirming receipt thereof, wherein the processor dynamically determines when, with respect to forwarding of one or more electronic messages, to send the request for the acknowledgment message such that acknowledgment messages corresponding to a particular electronic messages are received prior to or contemporaneously with the generation of the result of the processing thereof by the transaction processing system.
Clause 40. The system of clause 22, wherein the remote processing system is further configured to communicate a single acknowledgment message corresponding to the electronic message and at least one other electronic message contemporaneously communicated therewith or previously communicated prior thereto.
Clause 41. The system of clause 22, wherein the computer executable instructions are further executable by the processor to cause the processor to direct the remote processing system to communicate a single acknowledgment message corresponding to the electronic message and at least one other electronic message contemporaneously communicated therewith or previously communicated prior thereto.
Clause 42. The system of clause 41, wherein the computer executable instructions are further executable by the processor to cause the processor to determine when to direct the remote processing system to communicate the single acknowledgment message based on a time difference between when a prior direction was sent and when the acknowledgment message responsive thereto was received, and an amount of time it took the first transaction processing system to process a prior electronic message upon receipt thereby and generate a result indicative thereof to be communicated to the recipient device.

## Claims

1. A computer implemented method comprising:
receiving, by a processor coupled with a message producer via an electronic communications network, an electronic message communicated to a first transaction processing system coupled with the processor for processing thereby prior to receipt by the first transaction processing system, the transaction processing system configured to process each message upon receipt thereby and generate a result indicative thereof to be communicated to a recipient device;
contemporaneously forwarding, by the processor, a first copy of the electronic message to the first transaction processing system for processing thereby and a second copy of the electronic message to a remote processing system coupled with the processor and configured to communicate an acknowledgment message corresponding to the electronic message back to the processor at least confirming receipt of the second copy of the electronic message thereby; and
preventing, by the processor, the result generated based on the processing of the first copy of the electronic message from being communicated to the recipient device by the first transaction processing system until the acknowledgment message corresponding to the second copy of the electronic message has been received from the remote processing system.

2. The computer implemented method of claim 1, wherein the processor comprises a first processing thread which forwards the message copies and stores data in the log, a second processing thread which watches for results, a third processing thread which watches for acks, and a fourth processing threads which determined when to release results.

3. The computer implemented method of any preceding claim , wherein the processing of the electronic message by the first transaction processing system to generate the result takes an amount of time which may vary.

4. The computer implemented method of any preceding claim, wherein the first transaction processing system is capable of processing more than one electronic message simultaneously or comprises a set of sequential processing stages, each of which may be processing a different electronic message at the same time.

5. The computer implemented method of any preceding claim, wherein one or more of the sequential processing stages produces an intermediate processing result based on the processing of an electronic message.

6. The computer implemented method of any preceding claim, wherein the remote processing system comprises one of:
a storage system configured to store the second copy of the electronic message; or
a second transaction processing system configured to process each electronic message and generate a result indicative thereof as a backup to the first transaction processing system, wherein the second transaction processing system is optionally located in a different geographic region from where the first transaction processing system is located.

7. The computer implemented method of any preceding claim, wherein the remote processing system is further coupled with a plurality of other remote processing systems, the remote processing system configured to relay received electronic messages to the other remote processing systems and ensure that the other remote processing systems received the electronic messages related thereto.

8. The computer implemented method of any preceding claim, wherein the acknowledgment message comprises data indicative of a commit operation performed by the remote processing system.

9. The computer implemented method of any preceding claim, wherein communication of the result generated based on the processing of the first copy of the electronic message is only prevented when the result generated based on the processing of the first copy of the electronic message has been generated prior to receipt of the acknowledgment message corresponding to the second copy of the electronic message.

10. The computer implemented method of any preceding claim, further comprising storing data indicative of the forwarding in a data structure maintained by the processor in a memory coupled therewith in association with data indicative of the electronic message and:
when the result based on the processing of the first copy of the electronic message has been generated prior to receipt of the acknowledgment message corresponding to the second copy of the electronic message, storing data indicative of the result having been generated in the data structure; and
when the acknowledgment message corresponding to the second copy of the electronic message has been received prior to generation of the result based on the processing of the first copy of the electronic message, storing data indicative of the acknowledgment having been received in the data structure; and
wherein the preventing further comprises, upon determining by the processor, using the data structure, that data indicative of one of the result having been generated or the acknowledgment having been received is stored in the data structure, determining, by the processor, whether the other of the result having been generated or the acknowledgment having been received has occurred.

11. The computer implemented method of any preceding claim, wherein the remote processing system is one of a plurality of remote processing systems to which the second copy of the electronic message is sent, wherein the preventing further comprises preventing, by the processor, the result generated based on the processing of the first copy of the electronic message from being communicated to the recipient by the first transaction processing system until the acknowledgment message corresponding to the second copy of the electronic message has been received from at least a subset of the plurality of remote processing systems.

12. The computer implemented method of any preceding claim, wherein the processor comprises a buffer memory configured to store the result from the transaction processing system and communicate the result to the recipient when not prevented from doing so.

13. The computer implemented method of any preceding claim, further comprising, determining, by the processor a sequence in which the electronic message was received relative to previously received electronic messages, and determining upon a failure of the transaction processing system, based on the determined sequence, the electronic message forwarded for processing in sequence just after to the last electronic message for which a result was communicated, such that recovery begins therefrom, wherein the processor is optionally configured to assign a sequence to each electronic message upon receipt thereof, the sequence indicative of an ordering of the electronic message relative to previously received electronic messages.

14. The computer implemented method of any preceding claim, wherein the processor is configured to be able to recover all electronic messages which have been forwarded to the transaction processing system for which a result has not been communicated.

15. The computer implemented method of any preceding claim, wherein the remote processing system is further configured to communicate the acknowledgment message corresponding to the electronic message only upon receipt of a request therefore from the processor, wherein when the request is received by the remote processing system subsequent to receipt thereby of a plurality of electronic messages received subsequent to a prior request, the acknowledgment message corresponds to the plurality of electronic messages confirming receipt thereof, wherein the processor dynamically determines when, with respect to forwarding of one or more electronic messages, to send the request for the acknowledgment message such that acknowledgment messages corresponding to a particular electronic messages are received prior to or contemporaneously with the generation of the result of the processing thereof by the transaction processing system.

16. The computer implemented method of any preceding claim, wherein the remote processing system is further configured to communicate a single acknowledgment message corresponding to the electronic message and at least one other electronic message contemporaneously communicated therewith or previously communicated prior thereto.

17. The computer implemented method of any preceding claim, further comprising directing, by the processor, the remote processing system to communicate a single acknowledgment message corresponding to the electronic message and at least one other electronic message contemporaneously communicated therewith or previously communicated prior thereto and optionally determining, by the processor, when to direct the remote processing system to communicate the single acknowledgment message based on a time difference between when a prior direction was sent and when the acknowledgment message responsive thereto was received, and an amount of time it took the first transaction processing system to process a prior electronic message upon receipt thereby and generate a result indicative thereof to be communicated to the recipient device.

18. A system comprising:
a processor and a non-volatile memory coupled therewith, the memory comprising computer executable instructions that, when executed by the processor, cause the processor to perform the computer implemented method of any preceding claim.
